(19) Europäisches Patentamt
European Patent Office
Office européen des brevets

(11) **EP 3 121 565 B1**

## (12) EUROPÄISCHE PATENTSCHRIFT

(45) Veröffentlichungstag und Bekanntmachung des Hinweises auf die Patenterteilung:
**12.09.2018 Patentblatt 2018/37**

(51) Int Cl.:
***G01D 5/347*** *(2006.01)*     ***G01D 5/249*** *(2006.01)*

(21) Anmeldenummer: **15178188.7**

(22) Anmeldetag: **24.07.2015**

(54) **ABSOLUTPOSITIONSBESTIMMUNG**

ABSOLUTE POSITION DETERMINATION

DETERMINATION DE POSITION ABSOLUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.01.2017 Patentblatt 2017/04**

(73) Patentinhaber: **Hexagon Technology Center GmbH**
**9435 Heerbrugg (CH)**

(72) Erfinder:
• **JORDIL, Pascal**
**CH-1612 Ecoteaux (CH)**

• **FRITSCH, Robert**
**CH-9436 Balgach (CH)**

(74) Vertreter: **Kaminski Harmann**
**Patentanwälte AG**
**Landstrasse 124**
**9490 Vaduz (LI)**

(56) Entgegenhaltungen:
**EP-A1- 1 043 571**     **DE-A1- 3 703 327**
**DE-A1-102008 054 042**    **DE-T2- 68 920 123**

**Beschreibung**

Die Erfindung betrifft eine Absolutcode-Skala eines Linearpositionsgebers nach Anspruch 1 sowie ein absolutes Linearmesssystem mit einer derartigen Absolutcode-Skala nach Anspruch 8 und des weiteren ein Verfahren zur Erstellung und Auslesung einer Absolutcode-Skala nach den Ansprüchen 11 und 12, als auch ein ebensolches Computerprogrammprodukt.

Bei einer linearen Positionsbestimmung, insbesondere bei hochgenauen Anwendungen im Bereich von Präzisionsmaschinen, Koordinatenmessmaschinen oder vergleichbaren Anwendungsfeldern, werden Linearmesssysteme eingesetzt. In etlichen Anwendungen sind dabei Messgenauigkeiten im Sub-Millimeter-oder Sub-Mikrometer-Bereich erforderlich, in anderen Anwendungen, Maschinen oder Geräten, in welchen die vorliegende Erfindung ebenfalls Anwendung finden kann, können die Genauigkeitsanforderungen aber auch im Millimeterbereich liegen. In vielen dieser Anwendungen sind die Linearmesssysteme vorzugsweise als Absolutwert-LinearPositionsgeber ausgebildet, welche über die gesamte Länge ihres Messbereichs einen eindeutigen, absoluten Positionswert bereitstellen.

Beispielsweise zeigt EP 0 268 558 eine Absolutskala, welche in zwei separate, parallele Skalen mit periodischer Codierung unterschiedlicher Periodizität aufgeteilt ist.

DE 38 18 044 zeigt eine Verwendung von mehreren Zeilensensoren auf einem Unterträger, welcher vorzugsweise einen thermischen Ausdehnungskoeffizienten von Null oder gleich jenem der Skala aufweist. Die Codierung ist als eine Verschachtelung von Absolut- und Inkrementalcodierung in einer gemeinsamen Skala ausgebildet.

Bei einer Koordinatenmessmaschine in Portalbauweise werden beispielsweise zahlreiche Linearsensoren eingesetzt, um die räumliche Position eines Messkopfes in mehreren Dimensionen zu bestimmen. Dabei können die zu erfassenden Messbereiche durchaus mehrere Meter betragen. Es gilt daher entsprechende absolutcodierte Linearmesssysteme bereitzustellen, mit welchen ein absoluter Positionswert eines Lesekopfes gegenüber einer Code-Skala mit hinreichender Positionsauflösung ermittelbar ist, und mit welchen der gesamte Messbereich absolutcodiert werden kann, selbst bei grossen Messbereichen. Dabei sollte die Auslesbarkeit und Auswertbarkeit des Codes möglichst einfach gehalten werden.

Bei Positionsgenauigkeiten im Mikrometerbereich oder darunter, können sich zusätzlich zu den Bewegungen in Längsrichtung der Linearsensoren auch Abweichungen in Querrichtung störend auf die Genauigkeit der ermittelten räumlichen Position eines Messkopfes auswirken. Es ist daher insbesondere anzustreben, derartige parasitäre Effekte ebenfalls ermittelbar zu machen, beispielsweise um daraus entstehende Messfehler zu erkennen und/oder entsprechend kompensieren zu können. Es sind für derartige Ausführungsformen also vorzugsweise Linearpositionsgebersysteme bereitzustellen, mit welchen neben ihrer primären Absolutpositionsbestimmung in Längsrichtung entlang des Lineargebersystems, zumindest in einer, von der primären Lineargebermessrichtung abweichenden, weiteren Richtung eine Lage bestimmbar ist, wenn auch mit einem deutlich eingeschränkteren Messbereich als in der primären Linear-Messrichtung des Lineargebers, beispielsweise mit einem Messbereich von einigen Millimetern oder darunter. Es ist also in einer vorteilhaften Ausgestaltung neben der primären Absolutpositionsbestimmung in Skalen-Längsrichtung zumindest in eingeschränkter Weise z.B. auch eine Bestimmung von Abweichungen in Querrichtung anzustreben.

Beispielsweise zeigt die EP 0 042 179 ein System zur Bestimmung von Positionen entlang einer Vorschubrichtung, welches speziell ein Bestimmen von Abweichungen einer Ideallage anhand eines Musters mit V-förmigen Streifen ermöglicht. Dabei wird eine anhand eines Musters inkrementell bestimmte Position durch ein weiteres separates, sich parallel zum ersten Muster in Vorschubrichtung erstreckendes, absolutes Muster absolut verortet, wobei das absolute Muster Grobpositionen mittels eines Gray-Codes codiert.

DE 197 32 398 zeigt die Messung von Verdrehung sowie x- und y-Richtung. Außerdem beschreibt es Randbedingungen für die Codierung.

Eine Aufgabe der vorliegenden Erfindung kann daher in einer Bereitstellung einer verbesserten Code-Skala bzw. eines verbesserten Systems zur Bestimmung von Positionen entlang einer linearen Vorschubrichtung gesehen werden, mit welchen einfach aber präzise Absolutpositionen bestimmbar sind.

Dabei ist eine weiterführende, spezielle Aufgabe, dass dabei auch eine Abweichung eines Positionssensors aus seiner Ideallage zur Code-Skala bzw. zu deren Code-Muster bestimmbar ist, insbesondere eine Lageabweichung quer zur Längsrichtung der Code-Skala.

Es ist insbesondere eine Aufgabe, einen langen Messbereich mit der Absolutcode-Skala abzudecken und dabei eine hinreichende Positionsauflösung zu erzielen, insbesondere ohne dabei eine komplizierte, störanfällige Auswertung zu benötigen. In manchen Anwendungen ist es dabei vorteilhaft, zumindest in eingeschränkter Weise z.B. auch eine Bestimmung von Abweichungen in Querrichtung anzustreben.

Beispielsweise zeigt die EP 0 042 179 ein System zur Bestimmung von Positionen entlang einer Vorschubrichtung, welches speziell ein Bestimmen von Abweichungen einer Ideallage anhand eines Musters mit V-förmigen Streifen ermöglicht. Dabei wird eine anhand eines Musters inkrementell bestimmte Position durch ein weiteres separates, sich parallel zum ersten Muster in Vorschubrichtung erstreckendes, absolutes Muster absolut verortet, wobei das absolute Muster Grobpositionen mittels eines Gray-Codes codiert.

DE 197 32 398 zeigt die Messung von Verdrehung sowie x- und y-Richtung. Außerdem beschreibt es Randbedingungen für die Codierung.

DE 689 20 123 schlägt eine Dekodierung von Zufalls- oder Pseudozufallssequenzen bei Absolutpositionskodierern vor, wobei unterschiedlich lange Fragmente der Zufallssequenz Bit für Bit verschachtelt sind.

DE 10 2008 054042 erwähnt eine absolute Positionscodierung, mit mehrfach hintereinander angeordneten Segmenten von mindestens drei Codeelementen, welche mittels einer Tabelle decodiert werden.

EP 1 043 571 betrifft ein absolutes Positionsmesssystem, mit mindestens zwei parallelen Spuren von, bezüglich der Messrichtung schräg angeordneten, absolutcodierten Strichen.

Eine Aufgabe der vorliegenden Erfindung kann daher in einer Bereitstellung einer verbesserten Code-Skala bzw. eines verbesserten Systems zur Bestimmung von Positionen entlang einer linearen Vorschubrichtung gesehen werden, mit welchen einfach aber präzise Absolutpositionen bestimmbar sind.

Dabei ist eine weiterführende, spezielle Aufgabe, dass dabei auch eine Abweichung eines Positionssensors aus seiner Ideallage zur Code-Skala bzw. zu deren Code-Muster bestimmbar ist, insbesondere eine Lageabweichung quer zur Längsrichtung der Code-Skala.

Es ist insbesondere eine Aufgabe, einen langen Messbereich mit der Absolutcode-Skala abzudecken und dabei eine hinreichende Positionsauflösung zu erzielen, insbesondere ohne dabei eine komplizierte, störanfällige Auswertung zu benötigen. In manchen Anwendungen ist es dabei vorteilhaft, dass die bereitgestellte Code-Skala stückelbar ist, dass also mehrere Code-Skalen oder Teile von Code-Skalen aneinandergereiht werden können um unterschiedliche Messbereichslängen abdecken zu können.

Eine Aufgabe ist dabei auch eine Code-Skala bereitzustellen, welche eine Selbstinitialisierung rein auf Basis der Code-Skala und ohne externe Hilfsmittel (wie hochgenaue Interferometer, etc.) ermöglicht.

Eine spezielle Aufgabe kann dabei auch sein eine Code-Skala bereitzustellen, welche in Ihrer Ausdehnung quer zur Codierungsrichtung schmal und vorzugsweise einzeilig ist, und welche mit einer in Längsrichtung der Skala ausgerichteten Anordnung von Sensoren in der Leseeinheit auslesbar ist.

Eine spezielle Aufgabe der Erfindung ist auch, eine Code-Skala bereitzustellen, deren Code-Marken derart ausgebildet sind bzw. ausgelesen werden, dass die Bestimmung der absoluten Codewörter tolerant gegenüber Ausdehnungen oder Verformungen der Code-Skala ist, insbesondere tolerant gegenüber Temperaturausdehnungen in Längsrichtung der Skala. Diese Aufgabe kann in Kombination oder getrennt mit obigen Aufgaben betrachtet werden.

Diese Aufgaben werden erfindungsgemäss durch die Merkmale der unabhängigen Ansprüche und/oder durch Merkmale der abhängigen Ansprüche gelöst bzw. diese Lösungen weitergebildet.

Die vorliegende Erfindung betrifft eine Absolutcode-Skala eines Positionsgebers bzw. einen Positionsgeber mit einer derartigen Absolutcode-Skala. Es kann sich dabei zum Beispiel um einen Linearpositionsgeber oder um einen Drehgeber handeln, es kann sich optional aber auch eine Positionscode-Skala entlang eines beliebigen Freiformpfades handeln. Diese Absolutcode-Skala setzt sich zusammen aus einer ersten Absolutcodefolge mit einer ersten primären Codeperiodenlänge, welche periodisch fortgesetzt wird, und zumindest einer zweiten Absolutcodefolge mit einer zweiten primären Codeperiodenlänge, welche periodisch fortgesetzt wird. Dabei sind die erste und die zumindest zweite Absolutcodefolge unterscheidbar und zueinander Codewortfremd. Dabei können die erste und die zweite Codeperiodenlänge auch gleich sein, diese können jedoch auch ungleich sein.

Entlang der Absolutcode-Skala sind jeweils abwechslungsweise ein Ausschnitt aus der ersten und ein Ausschnitt aus der zumindest zweiten Absolutcodefolge hintereinander angeordnet, und dabei sind in den unterschiedlichen Ausschnitten aus derselben Absolutcodefolge entlang dieser Anordnung, die Absolutcodefolgen jeweils zueinander verschoben, insbesondere um einen jeweils unterschiedlichen Bruchteil der primären Periodenlänge der Absolutcodefolge phasenverschoben. Das heisst beispielsweise um eine jeweils unterschiedliche Anzahl von Codeworten gegenüber einer der periodisch wiederholten Codefolgen, welche als Grundcodefolge gewählt wird. Das Verschieben der Phase kann also als ein Verschieben um einen Bruchteil der Grundperiode der periodischen Wiederholung der Codefolge verstanden werden.

Dabei kann speziell die erste und die zumindest zweite Absolutcodefolge jeweils eine binäre Maximalfolge sein. Dabei kann insbesondere die erste Absolutcodefolge und die zumindest zweite Absolutcodefolge jeweils eine Aufteilung einer einzigen Maximalfolge in zumindest zwei Fragmente, deren Fragmentlängen keine gemeinsamen Teiler aufweisen, sein.

Hierbei können aneinander grenzende, hintereinander angeordnete Ausschnitte der Absolutcodefolgen mit unterschiedlichen Ausrichtungen der, den Absolutcode codierenden Codemarken ausgebildet sein. Insbesondere kann z.B. jeweils die erste Absolutcodefolge in Form von Strichmarken mit einem ersten Winkeln zu einer Längsrichtung der Absolutcode-Skala ausgebildet sein und die zumindest zweite Absolutcodefolge in Form von Strichmarken mit einem zumindest zweiten, vom ersten unterschiedlichen, Winkeln zur Längsrichtung der Absolutcode-Skala ausgebildet sein. Damit sind die ersten und zumindest zweiten Ausschnitte anhand der Zugehörigkeit ihrer Codierung zu entweder der ersten oder der zumindest zweiten Absolutcodefolge, eindeutig einer der Absolutcodefolgen zuordenbar.

Eine Absolutposition entlang der Absolutcode-Skala kann somit anhand der Verschiebung von zwei Abschnitten aus derselben Absolutcodefolge (welche wie oben beschrieben anhand ihrer Codierung ermittelbar sind) zueinander ermittelt werden, da die Verschiebung der gleichcodierten Abschnitte in der erfindungsgemässen Absolutcode-Skala ja jeweils, vorzugsweise eindeutig, zueinander verschoben sind.

Mit anderen Worten kann die vorliegende Erfindung wie folgt beschrieben werden. Erfindungsgemäss werden Teile oder Gebiete von zwei oder mehr Absolutcodes, beispielsweise Maximalfolgen, abwechslungsweise und mit Phasenverschiebungen gegeneinander hintereinandergereiht. Mit einem Auslesenden Linearsensor, welcher längs der dabei entstehenden Code-Skala abtastet bzw. ausliest, wird anhand von Phasenverschiebungen zwischen - jeweils dem gleichen Absolutcode zugehörigen - Teilen eine Absolutposition bestimmt.

In einer weiterführenden Ausbildung sind für jeden der Absolutcodes die Codemarken mit einer unterschiedlichen Ausrichtung zur Längsachse der Codefolge ausgebildet. Anhand der Ausrichtung der Codes können damit entsprechend dieser Weiterführung der Erfindung weitere Freiheitsgrade bestimmt werden, wie dies z.B. im Folgenden weiter erläutert wird. Optional können dabei auch mehrere Sensoren in einer, zum Code harmonischen Anordnung zur Auslesung genutzt werden. Beispielsweise werden mehrere Zeilensensoren verwendet, welche hintereinander und parallel zur Skalenrichtung angeordnet sind, wodurch eine schmale Skala von z.B. 2 mm Breite verwendet werden kann, mit welcher in der hier beschriebenen Ausführungsform dennoch Querabweichungen ermittelbar sind.

Um die Querrichtung festzustellen und vorzugsweise auch messen zu können, kann die Code-Skala wie beschrieben mit Hilfe schräger Striche codiert werden, wobei die Geradensteigung innerhalb einer Linearsensorlänge des Lesekopfes wechselt - die Länge des Erfassungsbereichs des Linearsensors also grösser ist als die Länge eines der Teile der Absolutcodes, welche Teile abwechslungsweise und mit jeweils unterschiedlicher Ausrichtung aneinandergereiht verwendet werden. Eine günstige Ausgestaltung der Ausrichtungen ist z.B. zumindest annähernd +45° und -45°, es können aber auch andere Geradensteigungen genutzt werden, beispielsweise etwa in einem Bereich von 15° bis 75°, vorzugsweise zwischen 30° und 60°, insbesondere nicht im wesentlichen parallel zur Leserichtung.

Um viele nutzbare Striche zu erhalten, werden beispielsweise Gebiete mit gleicher Strichsteigung bei der Auswertung der Absolutposition anhand der Phasenverschiebung zueinander ausgewertet, wobei die Längen der Gebiete beispielsweise in etwa der halben Zeilensensorlänge entsprechen oder kürzer sind. Innerhalb jeweils eines dieser Gebiete wird ein periodischer Strichcode, z.B. ein binärer, abstandscodierter Code verwendet. Die Absolutposition wird auf Basis zweier Gebiete gleicher Strichsteigungen codiert und ergibt sich aus der Phasendifferenz der jeweiligen periodischen Codierungen. Die Phasenverschiebungen sind entweder fest vorgegeben oder können im Rahmen einer einmaligen Initialisierung durch Abfahren der Code-Skala ermittelt werden - es ist also eine Selbstinitialisierung der erfindungsgemässen Absolutcode-Skala ohne externe Hilfsmittel durchführbar.

Die erfindungsgemässe Absolutcode-Skala kann dabei speziell in einer Ausführungsform durch eine Anordnung von Codemarken auf einem Codeträger gebildet werden, bei welcher Anordnung ein Code-Wert einer der Codemarken anhand eines Verhältnisses einer ersten geometrischen Eigenschaft der Codemarke in relativem Bezug zu einer zweiten geometrischen Eigenschaft einer zweiten Codemarke ausgebildet ist. Die Code-Leseeinheit, welche gegenüber dem Codeträger beweglich ist, kann anhand einer Erfassung eines Teils der Anzahl der Codemarken eine Absolutposition der Leseeinheit gegenüber dem Codeträger ermitteln.

Der Code-Wert kann also in einem relativen Verhältnis von einer geometrischen Ausdehnung einer der Codemarken relativ zu einem geometrischen Abstand zwischen zwei der Codemarken ausgebildet sein, insbesondere als ein Verhältnis von zwei Breiten und/oder zwei Abständen von einer ersten und einer zweiten Codemarke.

Eine einzige der Codemarken kann dabei optional auch mehrwertig in Bezug auf mehrere der, vorzugsweise jeweils in eine Relativbeziehung gesetzten, geometrischen Eigenschaften dieser Codemarke ausgewertet werden.

Bei den hier behandelten linearen Skalen, kann der Code beispielsweise dargestellt werden, indem Codemarken in Form von unterschiedlich breiten Strichen und/oder Lücken bzw. in Form von unterschiedlichen Abständen von Strichen und/oder Lücken codiert werden. Diese Codemarken können auf Basis der unterschiedlichsten physikalischen Prinzipien erfasst und ausgewertet werden, beispielsweise:

  o optisch, etwa in Form von Strichen und Lücken mit unterschiedlichen optischen Transmissions- und/oder Reflexionsgraden, Beugungseigenschaften, Spektraleigenschaften oder dergleichen,
  o kapazitiv, etwa in Form von Strichen und Lücken mit unterschiedlichen elektrischen Permeabilitäten, Leitfähigkeiten und/oder Abständen, Flächen oder dergleichen, oder
  o magnetisch, etwa in Form von Strichen und Lücken mit unterschiedlichen Suszeptibilitäten, Magnetisierungen, Abständen, Flächen oder dergleichen.

Diese Striche und/oder Lücken werden entsprechend der vorliegenden Erfindung mit einer linearen Aneinanderreihung von Sensoren abgetastet bzw. abgebildet, sodass das abgetastete Codemuster als elektrische Information, beispielsweise als Intensitätsprofil eines Ausschnitts der Codierung vorliegt. Die Sensoren und somit das Intensitätsprofil sind dabei als Linien- oder Zeilensensor, also im Wesentlichen Zusammenhängend (also insbesondere mit allenfalls fertigungstechnisch erforderlichen Abständen zwischen den einzelnen Sensoren), entlang einer, vorzugsweise zumindest annähernd geraden, Linie angeordnet. Insbesondere ist der Erfassungsbereich eines einzelnen Sensorelements oder Pixels des Sensors in seiner Ausdehnung in Coderichtung zumindest gleich, vorzugsweise aber kürzer als die schmälste zu erfassende Codemarke, beispielsweise nur einen Bruchteil davon, also etwa um die hälfte kürzer, um 1/10 kürzer oder noch kleiner.

Die bei der Auslesung der Codierung auszuwertenden Breiten und/oder Abstände der erfassten Codemarken oder Codeelementen in Form von Strichen und/oder Lücken, werden bei der Bestimmung des gelesenen Codeworts meist diskretisiert, es werden also die gelesenen Werte mit einer oder mehreren Entscheiderschwellen verglichen und es wird jeweils ein innerhalb einer Bandbreite der Entscheiderschwelle liegender diskreter Wert zugeordnet. Die dabei ermittelten Werte werden dann über den Sensor hinweg zu einem ausgelesenen Codewort zusammengesetzt. Dieses Codewort stellt beispielsweise einen Teil der Absolutcodefolge dar, welcher daraufhin wie bekannt oder wie hier erläutert zu einem Absolutpositionswert ausgewertet wird.

Bei einer Verformung, z.B. einer Ausdehnung infolge einer Temperaturänderung oder einer mechanischen Belastung, ändert sich bei einem Codemuster entlang eines Kreises der Abstand der Striche nicht, sondern die Striche und somit der Code wandern lediglich weiter nach aussen - die Absolutpositionen über den Umfang werden dadurch aber nicht verfälscht.

Im Gegensatz dazu bewirkt eine Ausdehnung bei einer linearen Skala, bei welcher sich die Länge der Skala verändert, eine Verfälschung der absoluten Längsposition. Verformt sich eine lineare Skala, so verändern sich dabei die ausgelesenen Breiten- bzw. Abstands-Werte. Bei der Decodierung und Zuordnung der ausgelesenen Werte zu einem Codewert, welcher aus dem dabei verwendeten diskreten Codewortalphabet entnommen wird, ist dabei ein hinreichend grosser Abstand des ermittelten Werts zu den Entscheiderschwellen der Codezuordnung erforderlich, um ein fehlerhaftes Auslesen zu vermeiden. Die Entscheiderschwellen müssen also in einem hinreichenden Abstand gewählt werden, sodass auch bei derartiger Abweichung der Abstände und/oder Breiten der Codemarken von ihren theoretischen Idealwerten, die Codewörter korrekt erkannt und ausgewertet werden.

Erschwerend kommt meist hinzu, dass lineare Massstäbe in ihrer absoluten Länge oft deutlich länger sind als Drehgeberskalen (z.B. meist einige Zentimeter Umfang bei Drehgebern gegenüber Linearskalen in Längen von Dezimetern bis zu mehreren Metern) und, dass für die linearen Massstäbe häufig Werkstoffe mit grösseren thermischen Ausdehnungskoeffizienten verwendet werden (wie z.B. Metall-Codestreifen im Vergleich zu Glas-Codescheiben bei Drehgebern). Das Faktum, dass bei linearen Codes die Ausdehnung direkt in die Messung eingeht, erschwert die Dekodierung solcher Codes. Eine allenfalls auch für sich eigenständig betrachtbarer Aspekt einer Ausführungsform einer absoluten Positionscodierung der hier im Folgenden beschriebenen Erfindung, welche tolerant gegen Ausdehnungen ist, wird im Folgenden beschrieben. Insbesondere handelt es sich dabei um eine Positionscodierung bei Linearmassstäben - das Prinzip ist aber in gleicher Weise auch bei Rotationsmassstäben anwendbar. Entsprechend dieses Aspekts können beispielsweise auch höherwertige Codes verwendet werden, bzw. die Entscheiderschwellen bei der Code-Erkennung näher zusammengerückt werden, bzw. entsprechend feinere Codierungsmuster genutzt und sicher erkannt werden. In vorteilhafter Weise kann dies z.B. gemeinsam mit vorgehend beschriebener Codierung - also als spezielle Ausführungsform der hier beschriebenen Absolutcodemuster erfolgen - wenngleich dies nicht zwingend ist, sondern auch unabhängig davon betrachtet werden kann.

Anstelle einen Codewert direkt aus Abständen oder Breiten der Codemarken der Codierung zu ermitteln, wird entsprechend der in dieser beispielhaften Ausführungsform der Erfindung beschriebenen Gestaltung, eine Darstellung eines Positionscodes angewandt, in welcher ein Verhältnis zweier Abstände und/oder Breiten einen Codewert darstellen. Ein solcher Code kann im Rahmen der vorliegenden Erfindung alternativ zu den in einer anderen Ausführungsform ebenfalls anwendbaren, direkt auf absoluten Werten basierenden Breiten- und Abstandscodierungen erfindungsgemäss implementiert werden.

Der Codewert, welcher zur Auswertung mit Entscheiderschwellen verglichen wird, ist dabei ein Verhältnis von einem Zähler zu einem Nenner. Dabei sind Zähler und Nenner derart gewählt, dass ein Störeinfluss in Form einer allfälligen Verformung des Codeträgers sich auf Zähler und Nenner in zumindest annähernd gleicher Weise auswirkt, sodass sich der Störeinfluss bei der Verhältnisbildung zumindest teilweise kompensiert bzw. kürzt.

Der Wert des Nenners bestimmt sich in einer ersten Ausführungsform beispielsweise aus einem Abstand eines regelmässigen Codegitters, welches eine regelmässige Folge von Gitter-Pulsen im Auslesesignal des abtastenden Sensors darstellt. Der Wert des Zählers bestimmt sich zum Beispiel aus einer Lage eines, jeweils zwischen den Gitter-Pulsen liegenden Code-Pulses im Auslesesignal. In anderen Worten also aus der Lage des Code-Pulses gegenüber einem vorangegangenen und/oder einem nachfolgenden Gitter-Puls bzw. gegenüber einer Serie von mehreren Gitter-Pulsen. Der Wert des Codes steckt dabei also im relativen Verhältnis von Zähler zu Nenner.

Wenn sich nunmehr die Skala verformt, also beispielsweise temperaturbedingt ausdehnt, so wird dabei sowohl das Pulsgitter als auch der Abstand zum Codierungspuls grösser. Das Verhältnis dieser beiden Veränderungen bleibt dabei aber im Wesentlichen konstant, insbesondere kann die Ausdehnung in jenem verhältnismässig kleinen räumlichen Bereich der Code-Skala, welcher zur Auslesung des Absolutwerts herangezogen wird, als zumindest annähernd konstant angesehen werden. Insbesondere bleibt das erfindungsgemäss genutzte Verhältnis bei Verformungen stabiler als dies bei den jeweiligen Absolutwerten, aus welchen das Verhältnis gebildet wird der Fall wäre. Bei der Decodierung bleibt damit der Abstand zur Entscheiderschwelle folglich ebenfalls stabiler.

Ändert sich Beispielsweise der Zähler durch Verformung um x %, so ändert sich auch der Nenner (zumindest annähernd) um x %, womit sich die Änderungen im Wesentlichen wieder kürzen, also z.B.:

$$V = Z/N = Z(1+x)/N(1+x).$$

Da nunmehr ein deutlich geringerer Sicherheitsfaktor zur Abdeckung von z.B. temperaturbedingten Schwankungen der ausgelesenen Codewerte berücksichtigt werden muss, kann bei der Auswertung der Sicherheitsabstand zu den Entscheiderschwellen entsprechend kleiner gewählt werden. So kann z.B. die Codierung feiner aufgelöst, und/oder eine mehrwertigere Codierung eingesetzt werden. Beispielsweise kann etwa anstelle einer binären Codierung eine vier- oder achtwertige Codierung verwendet werden. Mit einer höherwertigen Codierung kann dann beispielsweise das absolutpositionsbestimmende Codewort entsprechend mit weniger Codemarken - also geometrisch kürzer - dargestellt werden, und/oder es kann eine feiner aufgelöste Codierung genutzt werden.

Der Tatsache, dass bei einer Temperaturausdehnung die erfindungsgemäss zuverlässig ausgelesene Absolutposition des Massstabs nicht mehr zwingend mit der absoluten Längennorm des Urmeters übereinstimmt, kann z.B. numerisch mittels Temperaturmessung und Ausdehnungskoeffizienten kompensiert werden.

Die Erfindung betrifft neben der Absolutcode-Skala konsequenter Weise ebenso ein absolutes Linearmesssystem mit einer solchen Absolutcode-Skala und mit zumindest einer berührungslosen Code-Leseeinheit, welche eine längs zur Absolutcode-Skala ausgerichtete lineare, im wesentlichen zusammenhängende Anordnung von mehreren, insbesondere optischen, Sensorelementen als Sensorzeile aufweist. Dabei ist die Code-Leseeinheit zur Erfassung und Auswertung der Absolutcode-Skala anhand von physikalischen, insbesondere optischen Intensitäts-Charakteristiken der die Absolutcode-Skala bildenden Codemarken ausgebildet.

Die Code-Leseeinheit kann mehrere Absolutcode-Lesebereiche aufweisen, welche harmonisch zur Teilung der hintereinander angeordneten Abschnitte der auszulesenden Absolutcode-Skala angeordneten sind. Dies bedeutet beispielsweise, dass in einer Ausführungsform unabhängig von der Position des Sensorkopfes entlang der Code-Skala zumindest zweimal ein Grenzbereich zwischen einem ersten und zumindest zweiten Abschnitt erfassbar ist.

Die Anordnung der Sensorelemente der Code-Leseeinheit kann aber auch durchgängig und zumindest gleichlang oder länger als zumindest eine Länge des längsten der Abschnitte plus zumindest zweimal eine eindeutige Codewortlänge der Absolutcodefolgen sein. Damit ist immer ein, für eine Codeauswertung hinreichender Teil, nämlich zumindest ein vollständiges Codewort, von zwei Abschnitten aus derselben Absolutcodefolge erfassbar, welche beiden Abschnitte erfindungsgemäss gegeneinander derart phasenverschoben sind, dass anhand dieser Verschiebung eine absolute Positionsinformation ermittelbar ist.

Im Sinne einer Erstellung einer erfindungsgemässen Absolutcode-Skala betrifft die Erfindung entsprechend auch eine Methode zur Absolutcodierung einer Code-Skala eines Lineargebers. Bei dieser Methode erfolgt ein Bereitstellen einer ersten und einer zweiten Absolutcodefolge, welche zueinander Codewortfremd sind, und ein Bereitstellen von, jeweils in Codefolgenrichtung versetzten, periodischen Wiederholungen der ersten und der zweiten Absolutcodefolgen. Auf Basis dieser erfolgt ein abwechslungsweises Aneinanderreihen von Ausschnitten aus den jeweils versetzten ersten und zweiten Absolutcodefolgen, wobei die Ausschnitte insbesondere grösser oder gleich der eindeutigen Codewortlänge der jeweiligen Absolutcodefolgen sind, sodass ein Ausschnitt zumindest eine Absolutcodeinformation der Absolutcodefolge beinhaltet.

Im Sinne einer Auswertung einer erfindungsgemässen Absolutcode-Skala betrifft die Erfindung entsprechend auch eine Methode zur Auslesung einer, insbesondere nach obiger Methode erstellten, absolutcodierten Code-Skala eines Lineargebers. Dabei erfolgt ein Erfassen eines Teils der Code-Skala mit einem zumindest annähernd längs der Code-Skala ausgerichteten linearen Sensorarray, ein Auswerten einer Codierungen in dem erfassten Teil und eine Zuordnung von Abschnitten des erfassten Teils der absolutcodierten Code-Skala zu jeweils einer von zumindest zwei unterschiedlichen, codewortfremden Absolutcodefolgen.

Auf obiger Basis erfolgt ein Bestimmen einer Relativlage von zumindest zwei der Abschnitte, welche derselben Absolutcodefolge zugeordnet sind, anhand der Codierungen in den Abschnitten, in Form eines Versatzes dieser Abschnitte zueinander, und ein Heranziehen des dabei ermittelten Versatzes als absolutcodierte Positionsinformation, welche die Position des Sensorarrays gegenüber der Code-Skala eindeutig widerspiegelt. Um eine hinreichende Positionsgenauigkeit der Positionsinformation zu erreichen, kann ein Verorten der absolutcodierten Positionsinformation anhand einer Bestimmung einer Lage, insbesondere Schwerpunktslage, von zumindest einer der, die Codierung der Abschnitte bildenden Codemarke in Bezug auf das Sensorarray erfolgen.

Dabei können die Abschnitte aus unterschiedlichen Absolutcodefolgen mit Codemarken ausgebildet sein, welche unterschiedliche bekannte Ausrichtungen gegenüber einer Richtung der Code-Skala aufweisen, und eine Erkennung eines QuerVersatzes aus einer Relativlage von Abschnitten mit unterschiedlichen Codierungen zueinander und anhand deren bekannten Ausrichtungen eine Absolutpositionsdekodierung ermöglichen. Somit kann erfindungsgemäss eine Ausführungsform einer Code-Skala entsprechend der Erfindung zur Bestimmung der Lageinformationen in mehreren Richtungen angewandt werden

Wie bereits beschrieben, kann bei dieser Methode optional auch eine Auswertung eines Codewerts von einer, die Codierung bildenden Codemarken auf Basis einer Relativbeziehung von zwei geometrischen Eigenschaften von einer oder mehreren Codemarken zueinander erfolgen.

Die vorliegende Erfindung umfass ebenso ein Computerprogrammprodukt mit Programmcode, welcher auf einem Datenträger gespeichert oder als elektromagnetische Welle (z.B. als Funksignal) bereitgestellt wird, welcher zur Generierung einer erfindungsgemässen Code-Skala ausgebildet ist. Ebenso umfasst die Erfindung auch ein derartiges Computerprogrammprodukt, welches eine Auswertung von Signalen eines Sensorarrays, welches eine erfindungsgemässe Code-Skala ausliest, und dessen Programmcode ausgebildet ist, entsprechend der vorliegenden Erfindung eine Absolutposition zu ermittelt, insbesondere wenn zudem ein Querversatz der Code-Skala gegenüber dem Codeleser ermittelt wird und/oder ein Verhältnis von zwei erfassten physikalischen Eigenschaften der Codemarken zu einem Codewert ausgewertet wird. Dieses gilt speziell, wenn das Computerprogrammprodukt auf einer digitalen Recheneinheit eines Codelesers oder auf einem, mit dem Codeleser verbundenen Positionsbestimmungssystem ausgeführt wird.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:

| | |
|---|---|
| Fig. 1 | eine erste beispielhafte Ausführungsform einer erfindungsgemässem Code-Skala zur Erläuterung deren Aufbaus und Zustandekommens; |
| Fig. 2 | ein zweites Beispiel einer Ausführungsform einer erfindungsgemässem Code-Skala zur Erläuterung deren Aufbaus und Zustandekommens; |
| Fig. 3 | ein Beispiel einer Ausführungsform einer Ausbildung einer Code-Skalen Darstellung nach einem speziellen Aspekt der vorliegenden Erfindung in einem Codetabellen-Winkel-Diagramm; |
| Fig. 4 | ein Beispiel einer Ausführungsform einer Ausbildung einer Code-Skalen-Darstellung nach einem speziellen Aspekt der vorliegenden Erfindung in einem Diagramm mit einer Differenz-Winkel-Darstellung; |
| Fig. 5 | eine Darstellung eines Beispiels einer erfindungsgemässen Code-Skala auf einem Codeträger; |
| Fig. 5a | eine erste beispielhafte Option einer erfindungsgemässen Ausführungsform eines Detail-Ausschnitts der Darstellung aus Fig. 5; |
| Fig. 5b | eine zweite beispielhafte Option einer erfindungsgemässen Ausführungsform eines Detail-Ausschnitts der Darstellung aus Fig. 5; |
| Fig. 5c | eine dritte beispielhafte Option einer erfindungsgemässen Ausführungsform eines Detail-Ausschnitts der Darstellung aus Fig. 5; |
| Fig. 6 | ein Beispiel eines ersten Detailausschnitts einer Ausführungsform einer erfindungsgemässen Code-Skala; |
| Fig. 7 | ein Beispiel eines zweiten Detailausschnitts einer Ausführungsform einer erfindungsgemässen Code-Skala zur Erläuterung einer Parallelversatzerkennung; |
| Fig. 8 | eine beispielhafte Darstellung eines vereinfachten Ablaufschemas eines erfindungsgemässen Ablaufs; |
| Fig. 9 | eine beispielhafte Ausführungsform der Erfindung in einer Koordinatenmessmaschine; |
| Fig. 10 | eine beispielhafte Ausführungsform der Erfindung mit nichtgerader Absolutcodescala; |
| Fig. 11 | eine beispielhafte Ausführungsform der Erfindung in Form eines Drehgebers. |

Die Figuren sind dabei, sofern nicht explizit angegeben, nicht als massstäblich zu betrachten. Gleiche oder funktionell ähnliche Merkmale sind, insoweit praktikabel, durchgängig mit denselben Bezugzeichen versehen und werden gegebenenfalls mit einem Buchstaben als Index unterschieden.

Zum leichteren Verständnis werden die folgenden Ausführungen an einer beispielhaften Ausführungsform mit einer binären seriellen Codierung erläutert. Das erfindungsgemässe Prinzip kann in einer anderen Ausführungsform aber in analoger Weise mit mehrwertigen Codierungen implementiert werden, insbesondere wie diese beispielhaft in einer Ausführungsform weiter unten angegeben ist. Alternativ kann eine mehrwertige Codierung auch in eine Binärdarstellung übersetzt werden, respektive vice versa.

Als Code werden erfindungsgemäss codewortfremde Folgen eingesetzt, welche periodisch wiederholt werden. Die Wiederholung erfolgt vorzugsweise periodisch mit der primären Periode der Folge. Beispiele solcher codewortfremden Folgen mit einer primären Periode sind etwa Maximalfolgen (Maximum Length Sequence, MLS), welche in bekannter Weise nach Bildungsgesetzen von verschiedensten Grade erstellt und/oder ausgewertet werden können. Weitere Beispiele solcher oder ähnlicher codewortfremder Folgen sind etwa auch in CH 704584 beschrieben. Es können optional auch Pseudo-Random-Codes (PRC) oder andere, z.B. empirisch ermittelte Codes, welche zur Absolutcodierung geeignet sind, also insbesondere besagte Eigenschaft der Codewortfremdheit eines hinreichend langen Codeworts der binären Folge aufweisen. Wie beispielsweise in EP 0 268 558 erwähnt, kann dazu neben der Nutzung zweier unterschiedlicher Codierungen, welche zueinander bezüglich der betrachteten Codewortlänge gegeneinander Codewortfremd sind, beispielsweise auch eine Maximalfolge mit einem gemeinsamen Bildungsgesetz verwendet werden, welche Folge in zwei Teil-Folgen aufgeteilt wird - womit sich beispielsweise die Auswertung vereinfachen lässt.

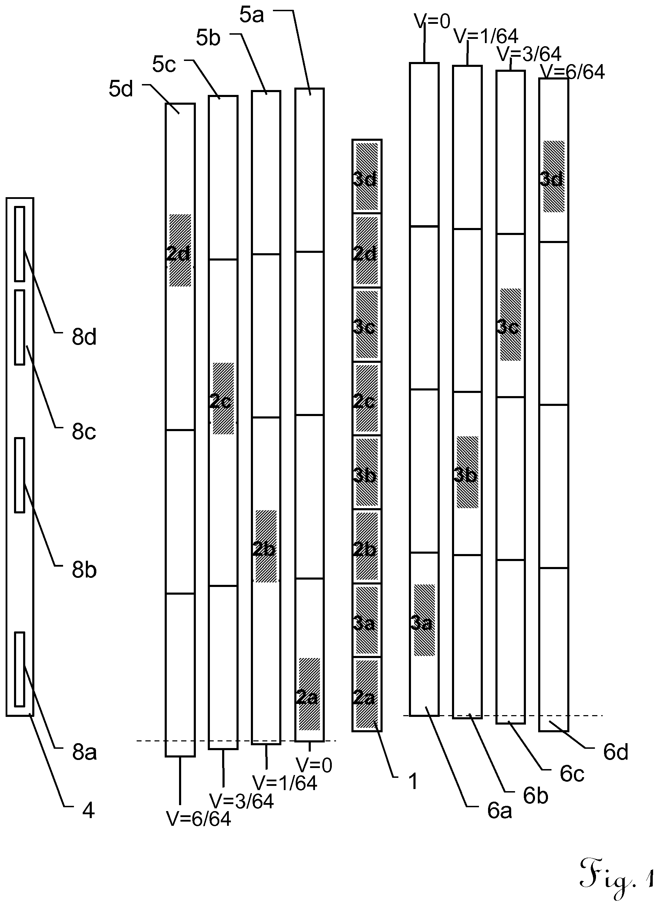

**Fig. 1** zeigt ein Beispiel, wie eine Ausführungsform einer erfindungsgemässen Absolutcode-Skala 1 aufgebaut sein kann bzw. zustande kommen kann. Der mittlere Codestreifen 1 im rechten Teil der Figur ist jene Skala, welche erfindungsgemäss resultiert und als erfindungsgemässe lineare Absolutcode-Skala 1 mittels eines Codeträgers oder direkt auf ein zu vermessendes Maschinenbauteil angebracht wird.

Die vier Streifen 5a,5b,5c,5d links davon enthalten den ersten periodisch wiederholten Absolutcode 2, dessen primäre Periode mit den schwarzen Rahmen dargestellt ist, Von rechts nach links sind die Streifen 5a,5b,5c,5d jeweils in Skalenrichtung entlang der Absolutcode-Skala verschoben, insbesondere um einen Bruchteil der primären Periodenlänge der Absolutcodierung. Beispielhaft gezeigt ist etwa von der Mitte nach Links eine Phasenverschiebung V um jeweils 0/64 für Streifen 5a, 1/64 für Streifen 5b, 3/64 für Streifen 5c und 6/64 der Periodenlänge für Streifen 5d. Alle Streifen 5a,5b,5c,5d weisen, abgesehen von der Verschiebung dabei den selben Absolutcode auf.

Aus den links gezeigten, ersten periodischen Absolutcodefolgen 5a,5b,5c,5d wird jeweils ein Ausschnitt für die mittlere Absolutcode-Skala 1 verwendet. Diese Ausschnitte sind in der Figur jeweils entsprechend markiert und mit 2a,2b,2c und 2d beschriftet. Zur Unterscheidbarkeit des ersten periodischen Absolutcodes in der Figur, ist der daraus verwendete Ausschnitt jeweils mit gleicher Strichsteigung dargestellt. In einer speziellen, weiter unten erläuterten Ausführungsform wird eine derartige Strichsteigung der Codemarken zusätzlich für einen weiterführenden Effekt genutzt, welcher für den hier beschriebenen Aspekt der vorliegenden Erfindung jedoch nicht zwingend erforderlich ist bzw. nicht genutzt werden muss.

Die vier rechten Codestreifen 6a,6b,6c,6d enthalten in analoger Weise zur linken Seite einen zweiten, vom ersten Unterschiedlichen und insbesondere zu diesem Codewortfremden, periodisch fortgesetzten Absolutcode 3, welcher ebenfalls in jedem der Streifen 6a,6b,6c,6d in Skalenrichtung unterschiedlich verschoben ist. Die Verschiebung kann insbesondere wiederum um einen Bruchteil der primären Periodenlänge dieses Absolutcodes erfolgen. Beispielhaft gezeigt ist etwa von der Mitte nach Rechts eine Phasenverschiebung V um 0/64 für Streifen 6a, 1/64 für Streifen 6b, 3/64 für Streifen 6c und 6/64 der Periodenlänge für Streifen 6d. Zur Unterscheidbarkeit der zweiten periodischen Codierung gegenüber der ersten periodischen Codierung in der Figur - ist wie bereits erwähnt - diese jeweils mit für diese zweite Absolutfolge gleichen, gegenüber der ersten Absolutcodefolge unterschiedlichen Strichsteigung dargestellt. Aus diesen zweiten Absolutcodefolgen wird ebenfalls jeweils ein Abschnitt 3a,3b,3c,3d,... für die resultierende, erfindungsgemässe Absolutcode-Skala 1 in der Mitte verwendet.

Die Verwendung von erster und zweiter Codierung erfolgt dabei abwechslungsweise, also alternierend einmal von der linken und einmal von der rechten Seite. Dies ist durch die unterschiedlichen Strichsteigungen deutlich ersichtlich. Zusätzlich sind die verwendeten Teile jeweils Beschriftet. Dabei sind die jeweiligen Elemente mit 2a, 3a, 2b, 3b, 2c, 3c, 2d und 3d gekennzeichnet. Der Buchstabenindex entspricht in diesem Beispiel der Phasenverschiebung, die Zahl kennzeichnet die erste (=2) Absolutcodefolge 5 bzw. zweite (=3) Absolutcodefolge 6 (welche hier auch der jeweils zugehörigen Strichsteigung für 2 oder 3 entspricht). Jedoch wäre für eine Absolutcode-Ausleseeinheit zur Unterscheidung der ersten und zweiten Absolutcodefolge die hier gezeigte unterschiedliche Strichsteigung nicht zwingend erforderlich, da diese Abschnitte anhand des Codes eindeutig unterscheidbar sind.

Es entsteht dabei also ein Codestreifen 1 mit einer wechselnden Abfolge von zwei unterschiedlichen, jeweils für sich eindeutigen Absolutcodeteilen 5 und 6, wobei die Absolutcodeteile aus derselben Absolutcodefolge in Code-Richtung jeweils gegeneinander (Phasen-)verschoben sind. In vorteilhafter Weise können beide Absolutcodefolgen aus einer einzigen Maximalfolge entnommen werden, indem diese, wie in EP 0 268 558 erläutert, in zwei Teile unterschiedlicher primärer Periodenlängen geteilt wird, da die beiden resultierenden Absolutcodefolgen dabei gegeneinander Codewortfremd sind. Zudem können in einem solchen Fall die Folgen nach demselben Bildungsgesetz erstellt bzw. ausgewertet werden. Alternativ können aber auch beliebige andere Folgen mit den geforderten Eigenschaften der Codewortfremdheit genutzt werden, beispielsweise systematisch oder empirisch mittels geeigneter Software entwickelte Folgen.

Die gezeigte Absolutcode-Skala 1 zeigt lediglich einen Ausschnitt der nach dem erfindungsgemässen Prinzip möglichen, maximalen Länge der somit entstehenden Absolutcode-Folge 1, bei welcher sich diese wieder beginnen würde zu wiederholen und damit mehrdeutig würde. Mit entsprechend mehreren linken und rechten Streifen 5n und 6n kann oben beschriebenes Vorgehen weiter fortgesetzt werden.

Das obige Prinzip kann auch auf mehr als die hier gezeigten zwei Basis-Absolutcodefolgen 5 und 6 ausgeweitet werden, beispielsweise auf drei oder mehr Basis-Absolutcodefolgen, welche dann entsprechend des erfindungsgemässen Ansatzes abwechslungsweise und mit unterschiedlichen Phasenversätzen aneinandergereiht werden.

Ganz links in Fig. 1 ist ein Beispiel einer Ausführungsform eines zur Auslesung der erfindungsgemässen Absolutcode-Skala 1 anwendbaren Code-Leseinheiten 4 gezeigt, welche beispielhaft über vier separierte linienförmige Auslesebereiche 8a,8b,8c,8d verfügt, mit welchen die auf der Absolutcode-Skala nach obigem Schema angeordneten Codemarken ausgelesen werden, und anhand deren Auslesung die Absolutcodes ausgewertet werden. Ebenso gut könnte aber z.B. ein einziger durchgängiger Liniensensor, z.B. eine CCD-Zeile angewandt werden. Weitere Details hierzu werden an anderer Stelle ausgeführt.

Bei absoluten Rotationsgebern tritt eine Problematik der in der im Folgenden aufgezeigten Ausführungsform eines Lineargebers nicht in dieser Form auf, da dort systembedingt eine periodische Wiederholung des Absolutcodes mit einer Geber-Umdrehung auftritt. Entsprechend ergibt sich der von der Skala absolut darzustellende Wertebereich nur aus der gewünschten Positionsauflösung einer Umdrehung. Dahingegen sollte bei einer erfindungsgemässen absoluten Linearskala über den gesamten Messbereich - welcher meist deutlich länger ist als der Umfang eines Drehgebers - keine periodische Wiederholung des Codes auftreten, da dies zu einer Absolutcodierung widersprechenden Mehrdeutigkeit führen würde. Die vorliegende Erfindung stellt absolute Positions-Skalen bereit, mit welchen bei Linearskalen ein Längenbereich absolut Codiert werden kann, welcher deutlich länger ist als die Grundperiode der verwendeten Absolutcodefolge.

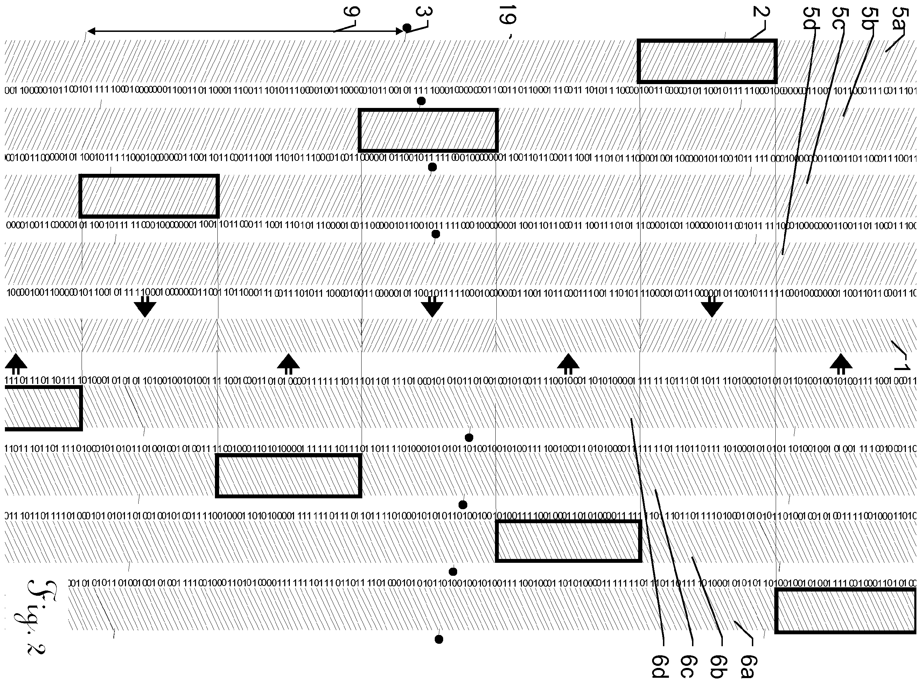

**Fig. 2** verdeutlicht nochmals ein mögliches Zustandekommen einer erfindungsgemässen Skala und/oder erläutert deren Auswertung zur Absolutpositionsbestimmung.

Die linken vier Hilfsskalen 5a,5b,5c,5d bestehen je aus periodisch fortgesetzten primitiven Absolutcodes. Deren primäre Periode ist durch die seitlichen Striche 3 gekennzeichnet, welche jeweils Anfang/Ende einer, auch mit der Masslinie 9 gekennzeichneten Periode markieren. Ein Beispiel von möglichen Werten einer verwendbaren binären Absolutcodefolge ist jeweils neben dem Codemuster angegeben. Die hier beispielhaft als Code-Striche ausgebildeten Codemarken, sind für diesen Absolutcode um +45 Grad gegenüber der Skalenrichtung geneigt. Die von links vierte Hilfsskala 5d kann beispielsweise als Referenz für alle Hilfsskalen 5 auf der linken Seite der, in der Mitte dargestellten erfindungsgemässen Absolutcode-Skala 1 betrachtet werden, welche letztendlich physikalisch am Messobjekt fixiert und zur Messung herangezogen wird. Links daneben ist die Hilfsskala 5c um 1/64 Periodenlänge 9 der primitiven Periode nach unten verschoben. Nochmals weiter Links daneben die Hilfsskala 5b um 3/64 und ganz links Hilfsskala 5d um 6/64. Eine derartige Verschiebung kann entsprechend in mehr als den hier beispielhaft dargestellten vier Hilfsskalen weitergeführt werden, wie diese weiter unten auch nochmals im Detail erläutert wird. Die Verschiebung ist in der Figur auch durch den Punkt neben einer der jeweiligen Codeperioden-Markierungen 3 ersichtlich, welche die Primärperioden abgrenzen. Abschnitte aus diesen Hilfs-Skalen 5a,5b,5c,5d, welche für die erfindungsgemässe Absolutcode-Skala 1 verwendet werden, sind jeweils mit einem rechteckigen Rahmen markiert und deren Verwendung mit horizontalen Strichen und einem Pfeil symbolisiert. Im gezeigten Beispiel stammt jeder zweite Abschnitt der Absolutcode-Skala 1 in der Mitte von einer der Hilfsskalen 5a,5b,5c,5d von der linken Seite.

Die rechts gezeigten vier Hilfsskalen 6a,6b,6c,6d bestehen ebenfalls aus je periodisch wiederholten primitiven Abschnitten, gekennzeichnet durch die seitlichen Striche, welche jeweils Anfang/Ende einer Periode kennzeichnen. Die Code-Striche der Codemarken sind rechts aber um -45 Grad geneigt. Die von rechts vierte Hilfsskala 6d kann wiederum als Referenz für alle Hilfsskalen auf der rechten Seite angesehen werden. Rechts daneben ist die Hilfsskala 5c um 1/64 Periodenlänge der primitiven Periode nach unten verschoben. Rechts daneben Hilfsskala 5b um 3/64 und ganz rechts Hilfsskala 5a um 6/64. Die Verschiebung ist auch durch den Punkt neben einer der Primärperioden-Markierungen 3 ersichtlich. Abschnitte aus diesen rechten Hilfs-Skalen 6a,6b,6c,6d, welche in der Absolutcode-Skala 1 verwendet werden, sind mit einem rechteckigen Rahmen markiert. Jeder zweite Abschnitt der Absolutcode-Skala 1 in der Mitte stammt von den rechten Hilfsskalen 6a,6b,6c,6d.

Die Auswertung der erfindungsgemässen Absolutcode-Skala 1 erfolgt dabei entsprechend eines weiteren Aspekts der Erfindung derart, dass die Absolutposition anhand des Versatzes zwischen zwei Abschnitten mit derselben Absolutcodefolge ermittelt wird. Entsprechend wird der Versatz in definierter oder bekannter Weise eingeführt. Dies erlaubt eine Absolutcode-Skala zu erstellen, welche länger ist als die primäre Periode der verwendeten Absolutcodes. Bei der Auslesung muss entsprechend ein Bereich der Absolutcode-Skala erfasst werden, welcher länger ist als der längere von erstem oder zweitem Abschnitt in der Absolutcodeskala 1, plus zumindest zwei mal der zur Absolutwertbestimmung erforderlichen Codewortlänge des Absolutcodes (also z.B. der grössere Grad der ersten oder zweiten Absolutcode-Folge 5 oder 6). Es ist dabei offensichtlich, dass zur Auslesung des Absolutcodes die Länge des Ausschnitts der Absolutcodefolgen 5 und 6, welcher für die erfindungsgemässe Absolutcode-Skala 1 verwendet wird, ebenfalls grösser oder zumindest gleich der zur Absolutwertbestimmung erforderlichen Codewortlänge des Absolutcodes (also z.B. dem Grad der Absolutcodefolge) sein muss. Alternativ kann auch eine Erfassung mit mehreren, zueinander in Coderichtung versetzt angeordneten, linienförmige Auslesebereiche erfolgen, welche derart angeordnet sind, dass in jedem Falle jeder von ihnen zumindest eine Schnittstellen zwischen den zwei Absolutcodefolgen erfasst, und auf beiden Seiten dieser Schnittstelle eine hinreichender Anzahl von Codemarken. Diese hinreichende Anzahl bedingt sich daraus, dass mit dieser ein Absolutcodefolgenausschnitt erfassbar sein muss, anhand dessen die Absolutcodefolge eindeutig bestimmbar ist, also etwa zumindest von der Länge eines eindeutigen Codeworts (respektive dem Grad der Absolutcode-Folge 5 oder 6).

In einer weiterführenden Ausführungsform kann zusätzlich oder alternativ zum Phasenversatz der Abschnitte aus derselben ersten Absolutcodefolge, auch ein Codewortwert der dazwischen liegenden zweiten Absolutcodefolge ausgewertet werden, und anhand der Relation von erstem zu zweitem Absolutcode-Wort das gelesen wurde eine Absolutpositionsbestimmung vorgenommen werden.

Mit einer Erfindungsgemässen Code-Skala kann auch eine Selbstinitialisierung des Messsystems durch abfahren der Code-Skala mit dem Lesekopf 4 erfolgen, also insbesondere ohne externe Hilfsmittel. Oben beschriebene Aneinanderreihung von Abschnitten ermöglicht auch eine einfache Stückelung der erfindungsgemässen Absolutcode-Skala 1, bei welcher beispielsweise vorgefertigte Code-Skalen Teile bei der Montage aneinandergereiht werden können um die Absolut zu vermessende Länge abzudecken, bzw. die Code-Skalen 1 nach bedarf abgelängt werden können. Die erfindungsgemässe Absolutcode-Skala 1 bleibt dabei lesbar und eindeutig. Die Genauigkeit der Schnittstellen zwischen den aneinander gereihten Absolutcode-Skalen-Teilen 1 ist dabei nicht höchst kritisch, allenfalls wird durch Ungenauigkeiten die erfindungsgemäss ohnehin grosse, maximal absolutcodierbare Länge reduziert.

Im Folgenden wird das Absolutcodeprinzip der vorliegenden Erfindung mit unterschiedlichen Ausrichtungen der Codemarken in den beiden Gebieten erläutert. Wird von einer Bestimmbarkeit eines Querversatzes abgesehen, so lässt sich, wie bereits beschrieben, dieses Prinzip der vorliegenden Erfindung, wonach sich die Absolutposition aus einem Phasenversatz von jeweils zwei Gebieten oder Abschnitten von Ausschnitten aus derselben ersten Absolutcodefolge, welche durch ein Gebiet von Ausschnitten zumindest einer anderen, zweiten Absolutcodefolge getrennt sind, auch ohne eine derartige, schräge Codemarke implementieren, also z.B. mit einer einheitlichen Strichsteigung, insbesondere auch mit orthogonal zur Messrichtung verlaufenden Strichen. Das Prinzip, der hier in einer speziellen Ausführungsform gezeigten Querabweichungsbestimmung, bei welchem die Querabweichung aus der Lage von unterschiedlichen Gebieten zueinander bestimmt wird, könnte für sich genommen daher auch als eigenständige Erfindung angesehen werden.

Die Gebietsposition wird - wie erläutert - über die Differenz der Phasenlagen codiert. Um den Einfluss der Querabweichung zu eliminieren werden für die Bestimmung der Absolutcodierung die Gebiete mit gleicher Geradensteigung gegeneinander betrachtet, in dem Beispiel mit zwei abwechslungsweise aufeinanderfolgenden Teilen aus zwei Absolutcodes mit jeweils unterschiedlichen Ausrichtungen der Codemarken oder Codeelementen also z.B. die Gebiete mit gerad- oder ungeradzahligem Index. Da beide betrachteten Gebiete dann dieselbe Ausrichtung aufweisen, hat eine allfällige seitliche Verschiebung entlang der Code-Skala 1 keine Auswirkung auf die relative Lage dieser beiden Gebiete zueinander. Damit kann die Phasenlage des in einem ersten der Gebieten genutzten Absolutcodes gegenüber dem in einem zweiten Gebiet mit demselben, aber phasenverschobenen Absolutcode derselben Ausrichtung unabhängig von der seitlichen Position des Lesekopfs 4 quer zur Skalenrichtung bestimmt werden, und aus dieser Phasenlage gemeinsam mit dem gelesene Code die absolute Position in Skalenrichtung.

Im Folgenden werden beispielhaft in der hier illustrativ gezeigten Variante z.B. 64 unterschiedliche Phasen verwendet.

Die Phasen der unterschiedlichen Gebiete aus demselben Absolutcode können beispielsweise betragen:
0, 1, 3, 6, 10, 15, 21, 28, 36, 45, 55, 2, 14, 27, 41, 56, 8, 25, 43, 62, 18, 39, 61, 20, 44, 5, 31, 58, 22, 51, 17, 48, 16, 49, 19, 54, 26, 63, 37, 12, 52, 29, 7, 50, 30, 11, 57, 40, 24, 9, 59, 46, 34, 23, 13, 4, 60, 53, 47, 42, 38, 35, 33, 32, 32, 33, 35, 38, 42, 47, 53, 60, 4, 13, 23, 34, 46, 59, 9, 24, 40, 57, 11, 30, 50, 7, 29, 52, 12, 37, 63, 26, 54, 19, 49, 16, 48, 17, 51, 22, 58, 31, 5, 44, 20, 61, 39, 18, 62, 43, 25, 8, 56, 41, 27, 14, 2, 55, 45, 36, 28, 21, 15, 10, 6, 3, 1, 0

Die Phasendifferenzen sind in obigem Fall dann:
1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63

Eine andersartige Phasenfolge als die linear steigende Phasenlage in obigem Beispiel ist aber ebenso einsetzbar.

In der Ausführungsform des hier gezeigten Beispiels kann jede dieser Phasendifferenzen von zwei möglichen benachbarten Gebieten stammen, die 180 Grad zueinander phasenverschoben sind. Da nur ein kleiner Teil der Sequenz beobachtet wird, ist diese Unsicherheit leicht zuzuordnen. Optional kann zur Eindeutigkeitsermittlung auch der Code aus der, zwischen den beiden hier ausgewerteten Gebieten der ersten Absolutfolge liegenden, zweiten Absolutfolge herangezogen werden. Insbesondere bei ungleicher Länge von erster und zweiter Absolutfolge kann in einer speziellen Ausführungsform der Erfindung ein dabei entstehender Versatz der beiden Absolutcodefolgen, welcher sich durch deren unterschiedliche Primärperiodenlängen ergibt, genutzt werden um daraus die Primärperiode der erfindungsgemässen Kombination beider Absolutcodefolgen auszuwerten und die damit eindeutig absolutcodierbare Länge des entstehenden Codemusters weiter zu verlängern.

In einer anderen Ausführungsform kann eine derartige 180-Grad-Unsicherheit auch vermieden werden, wenn in Kauf genommen wird, dass dann die maximale Codestreifenlänge nur die Hälfte beträgt oder die z.B. mit Verwendung einer entsprechend längeren Codierung kompensiert wird.

In einer weiteren Ausführungsform können z.B. alle ungeradzahligen Differenzen verwendet werden, also die Differenzen der Phasenlagen jedes Dritten, Fünften, ... Gebietes, was z.B. die unten gezeigten Folgen der Phasenlagen ergibt:

6, 9, 12, 15, 18, 21, 24, 27, 30, 33, 36, 39, 42, 45, 48, 51, 54, 57, 60, 63, 2, 5, 8, 11, 14, 17, 20, 23, 26, 29, 32, 35, 38, 41, 44, 47, 50, 53, 56, 59, 62, 1, 4, 7, 10, 13, 16, 19, 22, 25, 28, 31, 34, 37, 40, 43, 46, 49, 52, 55, 58, 61, 0, 3, 6, 9, 12, 15, 18, 21, 24, 27, 30, 33, 36, 39, 42, 45, 48, 51, 54, 57, 60, 63, 2, 5, 8, 11, 14, 17, 20, 23, 26, 29, 32, 35, 38, 41, 44, 47, 50, 53, 56, 59, 62, 1, 4, 7, 10, 13, 16, 19, 22, 25, 28, 31, 34, 37, 40, 43, 46, 49, 52, 55, 58

15, 20, 25, 30, 35, 40, 45, 50, 55, 60, 1, 6, 11, 16, 21, 26, 31, 36, 41, 46, 51, 56, 61, 2, 7, 12, 17, 22, 27, 32, 37, 42, 47, 52, 57, 62, 3, 8, 13, 18, 23, 28, 33, 38, 43, 48, 53, 58, 63, 4, 9, 14, 19, 24, 29, 34, 39, 44, 49, 54, 59, 0, 5, 10, 15, 20, 25, 30, 35, 40, 45, 50, 55, 60, 1, 6, 11, 16, 21, 26, 31, 36, 41, 46, 51, 56, 61, 2, 7, 12, 17, 22, 27, 32, 37, 42, 47, 52, 57, 62, 3, 8, 13, 18, 23, 28, 33, 38, 43, 48, 53, 58, 63, 4, 9, 14, 19, 24, 29, 34, 39, 44, 49

28, 35, 42, 49, 56, 63, 6, 13, 20, 27, 34, 41, 48, 55, 62, 5, 12, 19, 26, 33, 40, 47, 54, 61, 4, 11, 18, 25, 32, 39, 46, 53, 60, 3, 10, 17, 24, 31, 38, 45, 52, 59, 2, 9, 16, 23, 30, 37, 44, 51, 58, 1, 8, 15, 22, 29, 36, 43, 50, 57, 0, 7, 14, 21, 28, 35, 42, 49, 56, 63, 6, 13, 20, 27, 34, 41, 48, 55, 62, 5, 12, 19, 26, 33, 40, 47, 54, 61, 4, 11, 18, 25, 32, 39, 46, 53, 60, 3, 10, 17, 24, 31, 38, 45, 52, 59, 2, 9, 16, 23, 30, 37, 44, 51, 58, 1, 8, 15, 22, 29, 36

Als ein mögliches Beispiel einer Ausführungsform mit einer Nutzung einer geteilten Maximalfolge, kann etwa ein Absolutcode in Form einer binären Maximalfolge vom Grad 7, z.B. mit dem Bildungsgesetz (x^7+x^3+x^2+x^1+1), als Beispiel in die erste binäre Absloutcode-Folge:
100101111100010000000110011011000111001110101110000010011000 00101...
und in die zweite binäre Absolutcode-Folge:

010110100100101001111001000110101000011111110111011011111010 00101...

aufgeteilt werden. Dabei können neben dem hier beispielhaft gezeigten, auch andere Grade, Bildungsgesetze, und/oder Aufteilungen genutzt werden, wobei insbesondere der Grad sich nach dem zu kodierenden Wertebereich richten kann. Es kann jedoch auch immer dasselbe Bildungsgesetzt angewandt werden und je nach zu codierender Länge nur ein entsprechender Ausschnitt daraus genutzt werden. Insbesondere im Hinblick auf eine erfindungsgemäss mögliche Stückelung der Absolutcode-Skala kann dies die Lagerhaltung vereinfachen.

Für die erste Absolutcode-Folge des weiter oben angeführten Beispiels werden zur Querversatzbestimmung immer steigende Geraden zur Darstellung des Codemusters auf dem Codeträger genutzt, und für die zweite Absolutcode-Folge fallende Geraden. Anhand der Zugehörigkeit zu der ersten oder zweiten Absolutcodefolge können folglich bereits die Gebiete mit jeweils gleicher Geradensteigung identifiziert werden.
Anhand ungeradzahliger Differenzen kann die Position dieser Gebiete innerhalb einer Periode der Länge von 64 bestimmt werden, mit Auflösen der 180 Grad Unsicherheit sogar eine Periode der Länge 128.
Mit einem beispielhaft verwendeten Zeilensensor, mit welchem eine Länge von beispielsweise 7.68 mm erfassbar ist, kann die Länge zweier Gebiete beispielsweise in etwa in derselben Grössenordnung angenommen werden. Da Gebiete mit jeweils gleichen Geradensteigungen gleich codiert werden, erhält man damit eine codierte Länge von ca.

$$7.68mm \cdot 128 = 983mm$$

Daraus können zwei Grund-Skalen der Längen,

$$7.60mm \cdot 128 = 972.80mm \quad \text{und} \quad 7.76mm \cdot 128 = 993.28mm$$

gebildet werden. Sie unterscheiden sich lediglich in der Skalierung der Gebietsbreiten.
In einer speziellen Ausführungsform können die Ausschnitte mit gleicher Geradensteigung unterschiedlich breit ausgeführt sein. Dadurch wird die unterschiedliche Periodenlänge der beiden Maximalfolgen ausgeglichen. Mit Hilfe der beispielhaft gewählten Pulsabstände für einen Bitwert $d_0$=0 und einen Bitwert $d_1$=1 von

$$d_0 = 304 \mu m$$

$$d_1 = 338 \mu m$$

betragen die Längen der primären Perioden der ersten Absolutcodefolge:

$$35 \cdot d_0 + 29 \cdot d_1 = 20.442 mm \ ,$$

und der zweiten Absolutcodefolge:

$$29 \cdot d_0 + 35 \cdot d_1 = 20.646 mm \ .$$

Die jeweiligen Phasenverschiebungen betragen in diesem Beispiel mit jeweils 1/64 demnach für die erste Absolutcodefolge:

$$\frac{20.442 mm}{64} = 319.4 \mu m \ ,$$

und für die zweite Absolutcodefolge:

$$\frac{20.646 mm}{64} = 322.6 \mu m \ .$$

Man erhält folglich folgende Gebietsaufteilungen:

$$\frac{7.6 mm \cdot 20.442 mm}{41.088 mm} = \frac{64733}{17120} mm \approx 3.78 mm$$

$$\frac{7.6 mm \cdot 20.646 mm}{41.088 mm} = \frac{65379}{17120} mm \approx 3.82 mm$$

$$\frac{7.76 mm \cdot 20.442 mm}{41.088 mm} = \frac{330479}{85600} mm \approx 3.86 mm$$

$$\frac{7.76 mm \cdot 20.646 mm}{41.088 mm} = \frac{333777}{85600} mm \approx 3.90 mm \ .$$

Die gesamte, eindeutig absolutcodierbare Länge beträgt somit also deutlich mehr als die Länge der beiden einzelnen Absolutcodes für sich, ohne den Auswerteaufwand durch grössere Auswertetabellen oder Bildungsgesetze von höherer Ordnung, insbesondere wenn eine in Fragmente aufgeteilte Maximalfolge mit gemeinsamem Bildungsgesetzt genutzt wird.

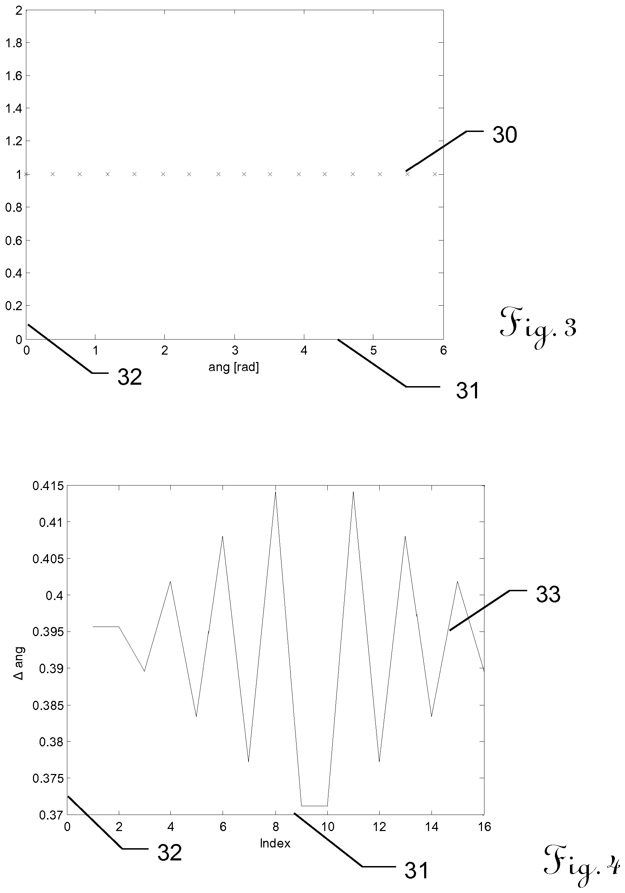

In einem speziellen Aspekt der vorliegenden Erfindung - welcher insbesondere in den Details von Fig. 3, Fig. 4 und Fig. 5 dargestellt wird - kann, neben anderen bekannten Ausführungsformen, eine praktische Ausführungsform der Codierung - wie bereits erwähnt - in vorteilhafter Weise derart gestaltet sein, dass die Codewerte mit einer Auswertung eines Verhältnis zwischen zwei Abständen und/oder Breiten bei Codeelemente ermittelbar sind - und nicht in ihren jeweiligen absoluten Breiten und/oder Abständen, womit sich die Codewertbestimmung insbesondere temperaturunabhängiger gestaltet. Insbesondere kann die Darstellung der Codierung in Form von Relativwerten von Codemarkenposition im Verhältnis zu Abständen und/oder Breiten eines fixen Rasters erfolgen - anstelle den Code anhand von jeweiligen Absolutwerten von Codemarkenbreiten oder Codemarkenabständen auszuwerten. Da das besagte Verhältnis, insbesondere lokal, temperaturausdehnungsunabhängig ist, ist eine Auswertung entsprechend dieses Aspekts der Erfindung stabiler und eine Entscheiderschwelle bei der Wertezuordnung im Rahmen der Detektion kann niedriger angesetzt werden. Dies erlaubt z.B. anstelle einer 2-wertigen Codierung die Verwendung einer z.B. 4-, 8- oder einer anderen mehrwertigen Codierung.

Mit anderen Worten, betrifft dieser Aspekt der vorliegenden Erfindung - welcher als abhängige Ausführungsform der vorliegenden Erfindung oder allenfalls auch als unabhängige eigenständige Erfindung angesehen werden könnte - eine Positionscodierung für einen Positionssensor, insbesondere ein optischer Absolut-Positionscode, gebildet durch eine Anordnung von mehreren Codeelementen oder Codemarken auf einem Codeträger welcher gegenüber einer Code-Leseeinheit beweglich ist, und mit welcher Code-Leseeinheit anhand einer Erfassung eines linearen, eindimensionalen Abschnitts des Positionscodes eine Absolutposition der Leseeinheit gegenüber dem Codeträger ermittelbar ist, welcher dadurch gekennzeichnet ist, dass ein Informationsgehalt der Positionscodierung in einem Verhältnis von einer ersten geometrischen Charakteristik, insbesondere einer geometrischen Ausdehnung eines Codeelements und/oder eines Abstands zwischen zwei Codeelementen, eines der Codeelemente relativ zu einer zweiten geometrischen Charakteristik eines der Codeelemente ausgebildet ist.

Das Verhältnis kann dabei insbesondere ein relatives Verhältnis eines Abstands zwischen zwei oder mehreren der Codeelemente sein gegenüber welchem Abstand eine räumliche Lage eines anderen Codeelements in Relation gesetzt wird.

In einer Ausführungsform kann beispielsweise ein fixes, insbesondere regelmässiges, Raster von Codeelementen mit jeweils zwischen diesem Raster angeordneten Codeelementen ausgebildet sein. Mit Bekanntheit bzw. Ermittlung der Periodizität der Regelmässigkeit des Rasters kann dann eine Lage des dazwischenliegenden Codeelements bestimmt werden, welche Lage dann entsprechend dieses Aspekts der Erfindung als Zähler relativ zum Abstand des Rasters als Nenner in Verhältnis gesetzt wird, und welches Verhältnis dann jenen Wert darstellt, der zur Auswertung mit einer oder mehreren Entscheiderschwellen verglichen wird um einen diskreten Wert für das Betreffende Codeelement zu bestimmen welche dann für sich oder mit diskreten Werten von weiteren Codewerten ein Codewort bildet, welches Codewort die Absolutposition angibt bzw. für die oben erläuterte Phasenversatzbestimmung genutzt wird. Bei der Festlegung des Abstandes des Rasters können entsprechend mehrere Codeelemente des Rasters einbezogen werden, beispielsweise durch Interpolation oder least-square-fit von mehreren Abständen.

In dem in Fig. 3 beispielhaft dargestellten Fall einer 8-wertigen Codierung, könnte das Grundraster z.B. bei

$$\mathtt{ct0} \;\; = \; 0$$

$$\mathtt{ct2} \;\; = \; 1*pi/4$$

$$\mathtt{ct4} \;\; = \; 2*pi/4$$

$$\mathtt{ct6} \;\; = \; 3*pi/4$$

$$\mathtt{ct8} \;\; = \; 4*pi/4$$

$$\mathtt{ct10} = 5*pi/4$$

$$\mathtt{ct12} = 6*pi/4$$

$$\mathtt{ct14} = 7*pi/4$$

und die darin verschobenen Pulse bei

$$ct1 = 1*pi/8 + 1*pi/1024$$

$$ct3 = 3*pi/8 + 3*pi/1024$$

$$ct5 = 5*pi/8 + 5*pi/1024$$

$$ct7 = 7*pi/8 + 7*pi/1024$$

$$ct9 = 9*pi/8 - 7*pi/1024$$

$$ct11 = 11*pi/8 - 5*pi/1024$$

$$ct13 = 13*pi/8 - 3*pi/1024$$

$$ct15 = 15*pi/8 - 1*pi/1024$$

liegen. Es ist in dieser Ausführungsform also jeweils ein einziges Codeelement (ct1, ct3...........) zwischen zwei Rastermarken (ct0,ct2,ct2.............), und ein Wert des Codeelements bestimmt sich als Verhältnis der Lage von (ct1)/(ct2-ct0).

In dem illustrativ gewählten Beispiel einer Pulsverteilung aus **Fig. 3** ist auf der Abszisse 31 der Winkel in Radiant dargestellt und die Pulse entsprechend obiger Tabelle sind mit Kreuzen 30 markiert. Dabei lässt sich - entsprechend der hierbei erfindungsgemäss niedrigen Entscheiderschwelle, welche zur Codewerterkennung eingesetzt werden kann - mit freiem Auge eine Unterscheidung der Codewerte nur schwer treffen. Entsprechend feinstrukturiert kann entsprechend auch das setzen entsprechender Entscheiderschwellwerte zur Bestimmung eines diskreten Codewerts erfolgen.

In der folgenden **Fig. 4** sind daher, um die unterschiedlichen Pulsabstände besser erkennen zu können, jeweils die Verhältniswerte, welche entsprechend dieses Aspekts der Erfindung zur Auswertung und Codewertdiskretisierung genutzt werden, dargestellt. Auf der Abszisse 31 ist der Index aus obiger Tabelle eingetragen und auf der Determinante 32 sind - mit der Kurve 33 verbunden - die jeweiligen Winkeldifferenzen in Radiant abgetragen, welche entsprechend dieses Aspekts der Erfindung ausgewertet werden.

Die ausgelesenen Werte der Codeelemente sind in diesem Beispiel lineare Positionen der Codeelemente entlang der Leserichtung des Sensors des Lesekopfes. Eine solche lineare Position kann beispielsweise nach einem Schwellwertprinzip oder mit einer Bestimmung eines Mittelpunktes oder Schwerpunktes in dem, durch das Codeelement im auslesenden Positionssensor hervorgerufenen Signal ermittelt werden.

Das beispielhaft gezeigte, erfindungsgemässe Prinzip lässt sich auch in ebenbürtiger Weise auf Codierungen anderer Wertigkeiten umlegen und entsprechend diese Beispiels, bzw. auch entsprechend einer der anderen hier aufgezeigten Alternativen, ausführen. Dabei ist die Wertigkeit, als die Anzahl der mit einer Codemarke codierbaren Anzahl von unterschiedlichen Codewerten (auch Codewortalphabet genannt) der Codierung zumindest zwei, vorzugsweise grösser zwei, insbesondere grösser 3, grösser 7, grösser 15 oder noch grösser. Optional können in einer anderen Ausführungsform auch zwei oder mehr unterschiedliche Codemarken zwischen zwei Rastermarken ausgewertet werden.

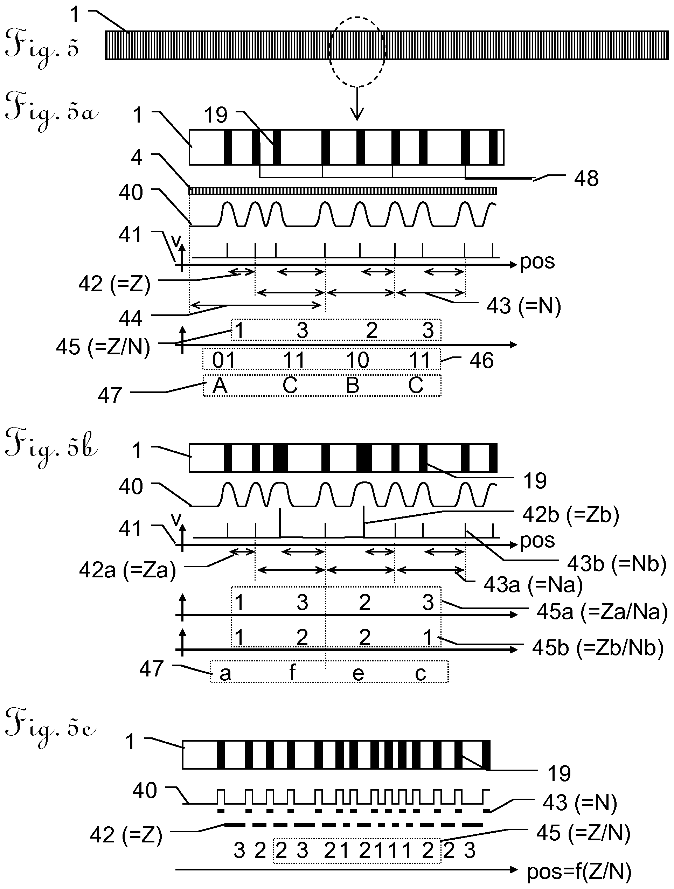

**Fig. 5, Fig. 5a, Fig. 5b und Fig. 5c** zeigen beispielhafte Ausführungsformen einer erfindungsgemässen Absolutcode-Skala 1 wie zuvor beschrieben, insbesondere in Form von Beispielen einer in einigen Belangen vorteilhaften Ausgestaltungsoption, welche einen speziellen Aspekt der Erfindung darstellen, welcher mit einer anderen als der obig beschriebenen Absolutcode-Skalen, allenfalls auch als eigenständige Erfindung gesehen werden kann. Gezeigt ist ein Ausschnitt einer erfindungsgemässen linearen Absolutcode-Skala 1, bei welchem beispielhafte Ausgestaltungsmöglichkeiten des eingekreisten Bereichs aus Fig 5 in Fig. 5a,5b,5c nochmals herausgezoomt dargestellt sind.

Für diesen herausgezoomten Bereich in **Fig. 5a** sind nochmals die Differenzen und die entsprechend diesem Aspekt der Erfindung ausgewerteten Verhältniswerte 45, welche mit Entscheiderschwellen entsprechenden Codewerten 46 oder 47 zugeordnet sind, aus welchen die mit einem Rahmen eingefassten Codeworte gebildet werden können, welche dann die eindeutige Absolutinformationen der Absolutcodefolge darstellen.

Im hier gezeigten Beispiel sind die Codemarken 19 als Striche ausgebildet, welche vorzugsweise zumindest annähernd orthogonal zur Auslesrichtung entlang der Absolutcode-Skala 1 bzw. des Sensors 4 orientiert sind. In einer anderen Ausführungsform können die Striche auch wie anderswo dargestellt Schräg zur Ausleserichtung z.B. in 30°, 45° und/oder 60°, oder einem beliebigen Winkel dazwischen ausgerichtet sein. Diese Striche 19 werden z.B. mit einem Zeilensensor 4 entlang einer, im wesentlichen zusammenhängenden Linie ausgelesen. Durch die Linienförmige Abtastung ist eine allfällige Schräge der Linien aus Sicht des Sensors 4 (abgesehen von der durch den schrägen Schnitt der Erfassungsrichtung mit den Codemarken veränderten absoluten Codemarkenbreiten) ohnehin nicht erkennbar. Eine Schräglage der Codemuster wird allenfalls durch die Veränderung der Breite der Codemarken und/oder deren Abständen in Richtung der Schnittlinie der Sensor-Ausleseachse feststellbar, deren störender Einfluss entsprechend dieses Aspekts der Erfindung gerade verringert bzw. vermieden wird. Wie weiter unten erläutert, kann aber z.B. gerade eine derartige Veränderung der Breite der Codemarken z.B. zur Bestimmung von Verkippungen genutzt werden. Die Ausrichtung der gezeigten Codemarken 19 gegenüber Linearcode-Skalenrichtung ist daher nicht als einschränkend zu sehen.

Beispielhaft ist ein Ausgangssignal 40 des Sensors 4 gezeigt, z.B. einer CCD- oder CMOS- Zeile bei einer Ausführungsform als optische Absolutcode-Skala im Durch- oder Auflicht-Verfahren. Dieses Sensor-Signal 4 wird einer Auswertung unterzogen, bei welcher die Positionen der Codemarken 19 (und der Rastermarken 48) in Bezug auf den Sensor 4 bestimmt werden. Beispielsweise kann ein Mittelpunkt, Schwerpunkt, Spitzenwert, Anfang und Ende einer Schwellwertüberschreitung, etc. ausgewertet werden und dessen Position in Bezug auf den Sensor 4, optional auch in Sub-Pixel-Auflösung des Sensors, bestimmt werden - wie dieses z.B. für den Fall einer Mittelpunktsbestimmung in der Kurve 41 dargestellt ist. Dabei kann eine, oder vorzugsweise mehrere, der ermittelten Positionen der Codemarken für eine Bestimmung der Feinposition 44 des im Folgenden erläuterten, ausgelesenen Absolutcodeworts genutzt werden. Insbesondere eine Mittelung oder ein Least-Square-Fit der in ihrer Position bekannten, erfassten Rastermarken 48 kann dabei angewendet werden.

Entsprechend dieses Aspekts der Erfindung werden bei der Absolutcode-Bestimmung Relativverhältnisse genutzt. In der hier gezeigten Ausführungsform beispielsweise die Abstände 43 der Rastermarken 48 als Nenner N und die Abstände der Codemarken 19 zu diesen als Zähler Z. Der Codemarkenwert 45 ergibt sich dann als Verhältnis von Zähler zu Nenner Z/N. Diese Verhältnisse 45 werden mit Entscheiderschwellen verglichen und somit zu Codewerten 46 diskretisiert. Damit haben Einflüsse aufgrund von Veränderungen durch Längenänderungen wie etwa Temperaturdehnungen oder Schräglage des Sensors keinen oder einen deutlich geringeren Einfluss als bei der Verwendung von absoluten Werten. Die Codierung lässt sich somit Sicherer auswerten oder die Entscheiderschwellen können somit näher zusammenrücken und die Codemarke 19 kann mehrwertiger Ausgelesen werden, z.B. wie im Codewort 47 gezeigt tertiär, oder es können mehrere Bits (2,3, oder mehr) mit einer einzigen Codemarke codiert werden. Somit werden beispielsweise weniger Codemarken 19 zur Darstellung des Absolutwert-Codeworts benötigt und es können entsprechend weniger feine Strichteilungen genutzt werden, was z.B. die Fertigung und Fehlerresistenz verbessern kann.

Neben oder zusätzlich zu der bereits erwähnten Codierung der Codeelemente 19 anhand deren Position relativ zu einem bekannten Raster 48, können die Codeelemente auch anhand deren Breite codiert sein, wie dies in der beispielhaften Ausführungsform in **Fig. 5b** dargestellt ist.

Das Verhältnis, welches entsprechend dieses Aspekts der Erfindung zur Auswertung herangezogen wird, kann in einer derartigen Ausführungsform nicht nur eine Relativbeziehung von unterschiedlichen Abständen, sondern auch z.B. eine Relativbeziehung von unterschiedlichen Breiten verschiedener Codemarken und/oder ein Verhältnis von Breite zu Abstand respektive auch ein Verhältnis von Abstand zu Breite sein.

In einer weiteren Ausführungsform kann zusätzlich zur Position der Codemarke 19 auch deren Breite als weiteres Codewortelement ausgewertet werden. Im Sensorsignal 40 sind diese Breiten ersichtlich, welche in der Sensorsignalauswertung 41 in die beiden Komponenten Breite v und Position pos dargestellt sind. Beispielsweise mit v als der Fläche einer Schwerpunktauswertung und pos als Position des Schwerpunktes. Die Werte v und pos können aber auch nach anderen Prinzipien, wie beispielsweise einem Schwellwertprinzip o.ä. ermittelt werden.

Entsprechend des Prinzips der vorliegenden Erfindung wird der Codewert wieder als Verhältniswert bestimmt, also in diesem Beispiel als ein Verhältnis der Position 42a als Zähler Za zu einer Position 43a als Nenner Na, welche das Verhältnis 45a von Za/Na als Codewert ergibt. Ebenso wird in diesem Beispiel ein Verhältnis der Breite 42b als Zähler Zb zu einer Breite 43b als Nenner Nb herangezogen, welche das Verhältnis 45b von Zb/Nb als Codewert ergibt.

Beide, das Abstandsverhältnis 45a und das Breitenverhältnis 45b können zu einem einzelnen Codewert für die Codemarke 19 zusammengefasst werden, womit das Codealphabet erweitert wird, insbesondere wenn ein oder beide Verhältnisse Mehrwertig ausgewertet werden. Beispielhaft dargestellt ist eine dreiwertige Codierung des Positionsverhältnisses 45a und eine zweiwertige Codierung des Breitenverhältnisses 45b, wobei dieses nicht einschränkend zu sehen ist und andere, insbesondere höherwertige, Codierung für eines oder beide der Verhältnisse 45a und 45b in analoger Weise anwendbar sind. Im gezeigten Beispiel umfasst das Codealphabet einer Codemarke in dem Absolutwert-Codewort 47 dann beispielsweise {a,b,c,d,e,f} bei einer beispielhaften Wortlänge des Absolutcodes von vier.

Eine einzige Codemarke 19 codiert in diesem Beispiel einer Ausführungsform also zwei Werte - einen ersten Wert ihrer Position pos, vorzugsweise relativ zu einem ebenfalls messtechnisch bestimmten Rasterabstand oder zu einem anderen Codemarkenelement - und zudem einen zweiten Wert ihrer Breite v, vorzugsweise in Bezug auf eine Breite der Rastermarken oder eines anderen Codemarkenelements. Der Umfang des Codewort-Alphabets ergibt sich damit aus der Anzahl der unterschieden, insbesondere relativen, Positionen multipliziert mit der Anzahl der unterschiedenen, insbesondere relativen, Breiten. Eine Positionsbestimmung der Codemarken 19,48 mit einer Schwerpunktsermittlung ist dabei besonders vorteilhaft, da bei dieser die Breite als Fläche (=Integralwert) der Codemarke im Rahmen der Schwerpunktsbestimmung neben der Schwerpunktsposition ohnehin anfällt. Anders ausgedrückt handelt es sich in dieser Ausführungsform pro Codemarke um einen zweidimensionalen Codewert mit (Schwerpunktsposition, Volumen), welcher geometrisch eindimensional dargestellt und mit einem eindimensionalen Liniensensor ermittelbar ist, aber im Wertebereich zweidimensional ist.

In **Fig. 5c** ist die Codierung durch unterschiedliche Abstände 42 als Zähler Z von gleichbreiten Strichen 43 als Nenner N dargestellt. Der aus dem Verhältnis Z/N - also aus dem Verhältnis von Strichabstand zu Strichbreite - ermittelte Codewert wird in diesem Beispiel zu einem mehr als zweiwertigen Codealphabet ausgewertet, aus welchen sich ein Absolutcode-Codewort 45 zusammensetzt, insbesondere einer erfindungsgemässen Absolutcode-Skala 1 wie diese weiter oben beschrieben ist. Dieses Absolutcode-Codewort 45 kann direkt einen absoluten Positionswert Codieren. Es kann aber auch der Versatz zwischen zwei ermittelten, voneinander getrennten Absolutcode-Codeworten 45 aus derselben Absolutcode-Folge (insbesondere der Phasenversatz in Bezug auf die Primäre Periode des Absolutcodes) genutzt werden, um die Absolutposition zu Codieren - wie dies entsprechend eines anderen Aspekts der hier beschriebenen Erfindung bereits erläutert wurde.

Mit anderen Worten kann bei allen hier zur relativen Positionscodemarken-Auswertung angeführten Beispielen der dabei bestimmte Absolutwert der Position anhand einer Auswertung von einem oder mehreren Codewort-Wert 47 von mehreren Codemarken 19, insbesondere im Raster 48, als Grobposition bestimmt werden. Alternativ kann die Absolutpositionsbestimmung auch wie erläutert aus dem Versatz zweier Ausschnitte desselben Absolutcodes ermittelt werden. Eine Feinposition kann anhand von Position des Rasters 48 und/oder der Codewerttragenden Codemarken 19, welche relativ zum Sensorelement 4 bestimmt wird, ermittelt werden. Insbesondere kann dabei mit Schwerpunktlagen der Codeelemente 19, speziell bei Berücksichtigung der Schwerpunktlagen mehrerer Codemarken 19 und/oder Rastermarken 48, speziell mit einer Interpolation oder einem Least-Square-Fit der Schwerpunktlagen und/oder Codemarkenbreiten, eine genaue Position des Lesekopfes 4 gegenüber dem Positionscode 1 auf dem Codeträger bestimmt werden.

Mit der erfindungsgemässen Möglichkeit, höherwertige Codierung mit hoher Sicherheit dem korrekten Codewort zuordnen zu können, kann z.B. mit Hilfe eines derartig ausgeführten Codes eine Absolutposition mit weniger Pulsen codiert werden, als dies z.B. bei einer zweiwertigen binären Codierung entsprechen des Stands der Technik möglich wäre. Dabei ist insbesondere die dabei erzielte, lokale Toleranz gegenüber Verformungen möglich, insbesondere eine Unabhängigkeit im Bezug auf Ausdehnungen durch Temperaturschwankungen oder Ausrichtungsfehler der Skala gegenüber dem Erfassungselement.

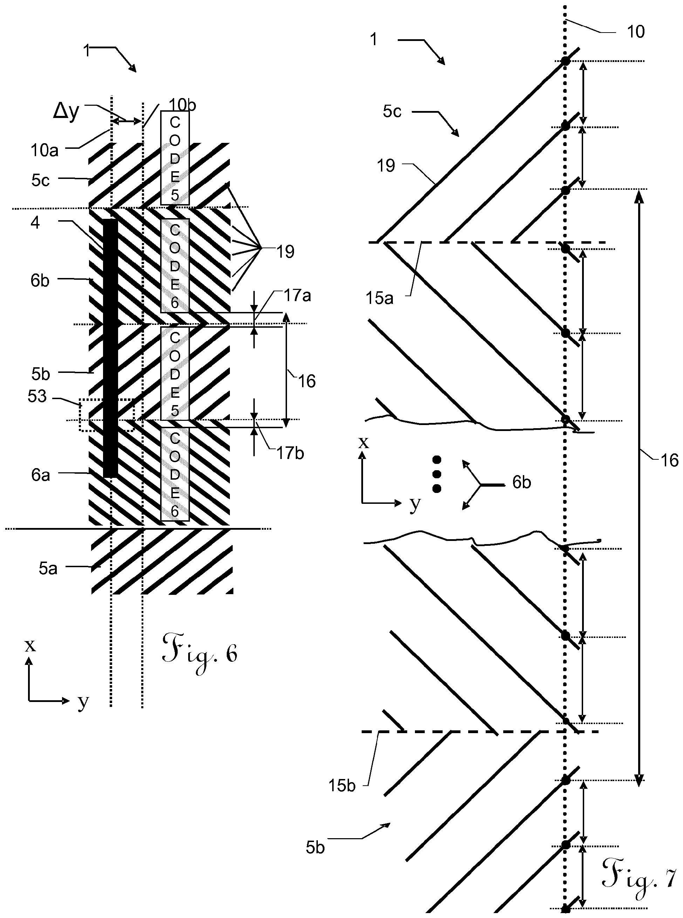

**Fig. 6,** zeigt nochmals eine Skizze eines Ausschnitts einer erfindungsgemässen Absolutcode-Skala 1, in einer Ausführungsform mit welcher auch Querversätze Δy ermittelbar sind. Die Code-Leseeinheit 4 oder genauer genommen, deren linienförmiger Erfassungsbereich, beispielsweise als ein Zeilensensor oder ein einspaltig ausgewerteter Array von Sensoren, ist mit seiner Leseachse 10a dargestellt. Um die Querabweichung Δy, zumindest annähernd orthogonal zur Längsachse der linearen Absolutcode-Skala ist eine versetzte Achse 10b dargestellt. Eine derartige Annäherung eines zumindest annähernd orthogonalen Querversatzes ist in den meisten Fällen hinreichend, da eine allfällige Winkelfehlstellung der Achsen 10a und 10b Aufgrund der Dimensionsverhältnisse kleiner und zumeist vernachlässigbar.

Die abwechslungsweisen Abschnitte der ersten Absolutcodes 5a,5b,5c und der zweiten Absolutcodes 6a,6b sind an ihrer Codemarken-Ausrichtung deutlich erkennbar und unterscheidbar, werden aber auch nochmals explizit mit CODE5 und CODE6 beschriftet. Entsprechend der in der Erfindung genutzten linearen Auslesung mit dem Liniensensor 4 sind die Ausrichtungen aus Sensorsicht jedoch per se nicht ermittelbar, da der Sensor 4 nur jeweils die Schnittbereiche der Codemarken 19 mit dem Sensor 4 erfasst, wie dies in der Detaildarstellung in Fig. 6 verdeutlicht wird. Neben dem hier durchgängig gezeigten Lesebereich des CodeLesers 4, kann dieser auch in mehrere, zur Erfassung des Absolutcodewerts hinreichend lange Stücke unterbrochen sein, welche insbesondere harmonisch zur Aufteilung der Abschnitte angeordnet sein können. Mithilfe des Codelesers 4 werden die Codewerte der Codierungen 5 und 6 sowie die Lage der Codierungen 5 und 6 entlang des Sensors ermittelt. Die Unterscheidung zwischen Codierungen 5 oder 6 erfolgt anhand einer Zuordnung der gelesenen Codeworte zu den jeweiligen Absolutcodes, welche ja codewortfremd sind. Die Absolutpositionen werden anhand des Versatzes 16 zwischen Codewerten aus zwei Abschnitten desselben Absolutcodes bestimmt, also beispielsweise dem Versatz 16 zwischen Abschnitt 6a und 6b, dem Versatz zwischen 5a und 5b oder zwischen 5b und 5c. Alternativ, wenn der Erfassungsbereich des Sensors 4 lange genug ist, könnte auch ein grösserer Abstand, als etwa ein Versatz zwischen 5a und 5c, oder mehrere Versätze betrachtet werden.

Kommt es nun zu einem Querversatz und die erfindungsgemässe Absolutcode-Skala dieser Ausführungsform wird statt entlang der Achse 10a nun entlang der versetzten Achse 10b ausgelesen, so ändert dies aufgrund der gleichen Ausrichtung der Codemarken in den Abschnitten der gleichen Absolutcodefolge nichts am ermittelten Versatz 16 der beiden gleich codierten Abschnitte 6a und 6b, und somit wird auch bei Querversatz Δy der selbe Längsversatz 16 und somit die selbe Absolutposition codiert. Jedoch verändert sich bei Querverschiebung Δy ein Versatz 17a bzw. 17b der Auslesewerte von Abschnitten aus unterschiedlichen Absolutcodefolgen, etwa zwischen Code 6a und 5b oder zwischen Code 5b und 6b, da die jeweiligen Codemarken der unterschiedliche Absolutcodes unterschiedliche Ausrichtungen aufweisen. Aus diesem Versatz 17a und/oder 17b unterschiedlicher Absolutcodefolgen 5 und 6 lässt sich somit der Querversatz Δy quantifizieren. Dabei kann in der Auswertung neben der reinen Zugehörigkeit des Abschnittes zu einer der Absolutcodefolgen 5 oder 6 auch der Wert des ausgelesenen Codeworts CODES und/oder CODE6 genutzt werden.

Der Teilbereich 53 in Fig. 6, welcher den Übergang zwischen zwei Abschnitten darstellt, ist nochmals vergrössert in **Fig.** 7 dargestellt.

Darin sind die Schnittpunkte der Codemarken 19 mit der Leseachse 10 des Lesekopfs 4 mit Punkten markiert welche zumindest in ihrer geometrischen Lage relativ zum Lesekopf 4 ausgewertet werden. Der Wert der Codierung kann z.B. auf Basis der eingezeichneten Abstände zwischen den Codemarken, oder einem anderen bekannten, insbesondere einem der hier aufgeführten, Verfahren ermittelt werden. Anhand der Lage zweier gleich codierten Abschnitte (z.B. 5b und 5c) zueinander, also des Versatzes oder der Phasenlage 16, welche bei einer erfindungsgemässen Absolutcode-Skala vorgegeben ist, wird eine Absolutpositionsinformation ermittelt, deren Feinposition von der Lage einer oder mehrer Codemarken in Bezug auf den Sensor 4 bestimmen lässt, insbesondere bis in Sub-Pixel-Genauigkeit des Sensors 4. Die über die Schnittstellen 15a und 15b zwischen den verschiedenen Abschnitten hinweggehenden Versätze unterschiedlich codierter Abschnitte erlaubt mit deren unterschiedlichen Ausrichtungen eine Bestimmung eines Querversatzes.

Optional können weitere Freiheitsgrade der Ausrichtung der erfindungsgemässen Absolutcode-Skala gegenüber der Code-Leseeinheit beispielsweise analog zu den in der EP-Patentanmeldung Nr. 15157967 dargelegten Prinzipien ermittelt werden.

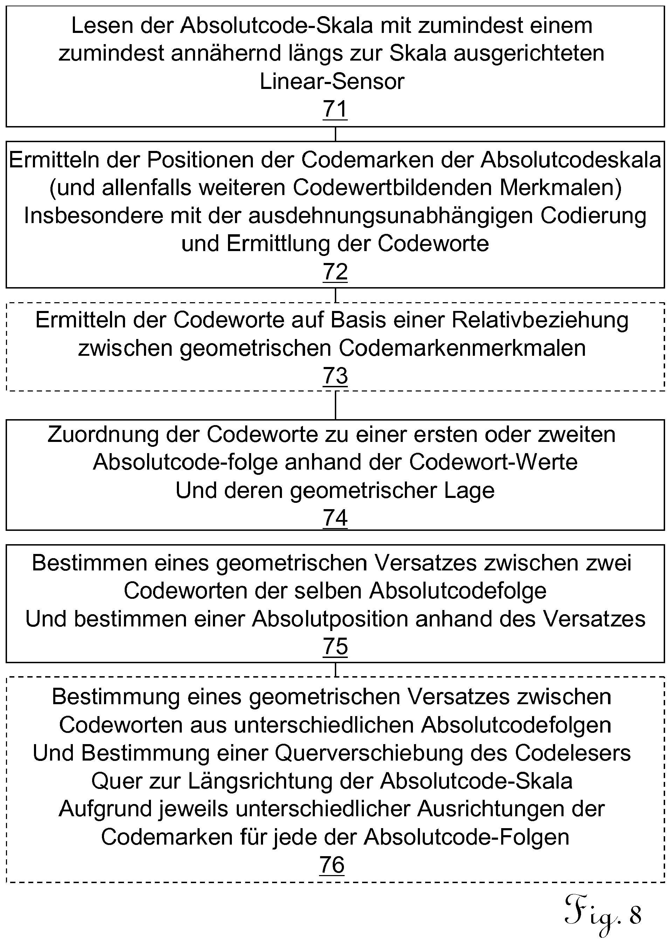

**Fig. 8,** zeigt ein Beispiel eines vereinfachten Blockdiagramms der Erfindung. In Block 71 erfolgt ein Lesen der Absolutcode-Skala mit zumindest einem zumindest annähernd längs zur Skala ausgerichteten Linearsensors. In Block 72 erfolgt ein ermitteln der Positionen der Codemarken der Absolutcodeskala. Dabei können allenfalls auch weiteren, codewertbildenden Merkmalen der Codemarken ausgewertet werden. Insbesondere kann dabei die oben beschriebene ausdehnungsunabhängigen Codierung und die entsprechende Ermittlung der Codeworte angewandt werden.

Ein Ermitteln der Codeworte auf Basis einer Relativbeziehung zwischen geometrischen Codemarkenmerkmalen ist in Block 73 gezeigt. In Block 74 erfolgt eine Zuordnung der Codeworte zu einer ersten oder zweiten Absolutcodefolge anhand der Codewort-Werte und eine Bestimmun der geometrischen Lage der Codeworte in Bezug auf den Sensor. In Block 75 erfolgt das Bestimmen eines geometrischen Versatzes zwischen zwei Codeworten aus derselben Absolutcodefolge und daraus ein Bestimmen einer Absolutposition anhand dieses Versatzes.

Optional erfolgt in Block 76 eine Bestimmung eines geometrischen Versatzes zwischen Codeworten aus unterschiedlichen Absolutcodefolgen, und daraus eine Bestimmung einer Querverschiebung des Codelesers Quer zur Längsrichtung der Code-Skala auf Basis der jeweils unterschiedlichen Ausrichtungen der Codemarken für jede der Absolutcode-Folgen.

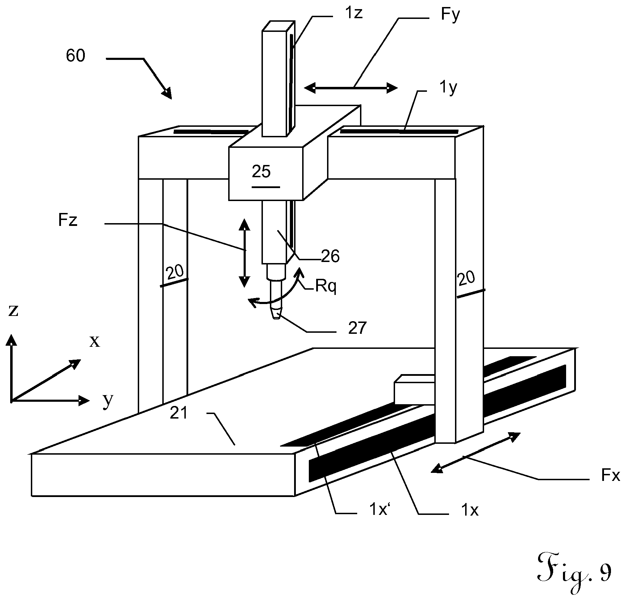

In **Fig. 9** ist ein Beispiel einer Ausführungsform mit zumindest einer erfindungsgemässen Code-Skala 1x, 1x', 1y, 1z in Form einer beispielhaft skizzierten Koordinatenmessmaschine 60 in Portalbauweise dargestellt. Darin ist zumindest eine der gezeigten Code-Skalen 1x, 1x', 1y, 1z welche indirekt über einen Code-Träger oder direkt auf feste oder bewegliche Komponenten 21, 20, 25, 26, 27 der Maschine aufgebracht sind, erfindungsgemäss ausgestaltet. Mittels dieser Positionsgeber wird die Raumposition des Messkopfes 27 bestimmt, anhand welcher ein hier nicht gezeigtes Werkstück in Richtung der beispielhaft gezeigten Raumkoordinaten Fx, Fy, Fz, Rq vermessen wird. Insbesondere bei der Ausführungsform, in welcher ein allfälliger seitlicher Versatz und/oder eine Verkippung des Codelesers gegenüber der erfindungsgemässen Code-Skala ermittelbar ist, können dabei allfällige Fehlstellungen detektiert und/oder numerisch oder mechanisch kompensiert werden. Zusätzlich kann - wie beschrieben - in der optionalen, speziellen Ausführungsform, die erfindungsgemässe Code-Skala derart ausgestaltet sein, dass die Auslesung des Codes auch bei allfälligen Temperaturdehnungen der Code-Skala fehlerfrei erfolgt.

Weitere, hier in den Beispielen nicht explizit aufgeführte Ausführungsformen, Details und Merkmalskombinationen der vorliegenden Erfindung, wie diese in den Patentansprüchen beansprucht werden, sind dem Fachmann geläufig.

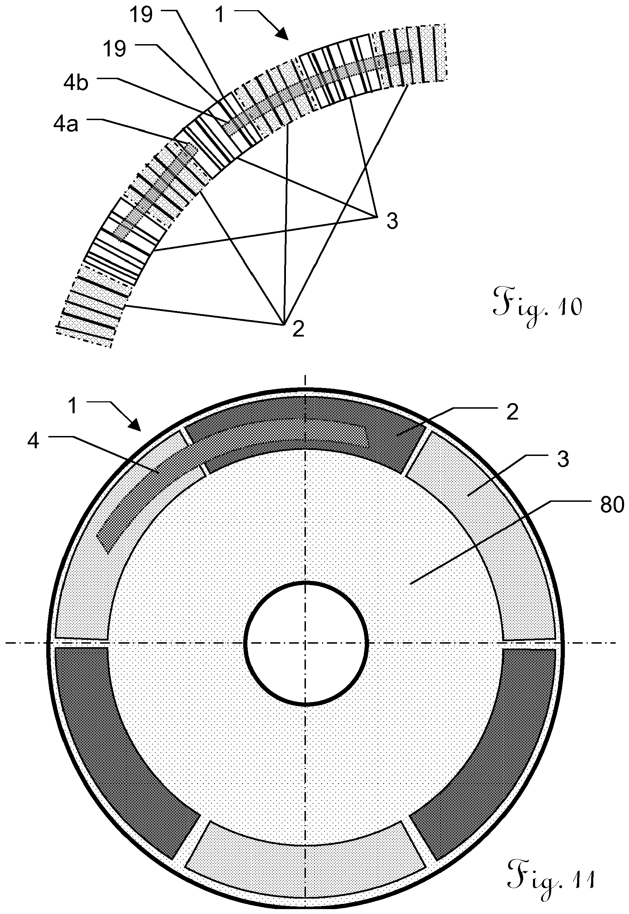

Die oben beschriebenen, erfindungsgemässen Absolutcode-Skalen und deren spezielle Ausführungsformen, lassen sich bei nicht geradliniger Anordnung in analoger Weise optional auch in nicht strikt linearen Positionsgebern anwenden, beispielsweise auch in Winkel-Encodern. Exemplarische Beispiele sind in Fig. 10 und Fig. 11 gezeigt. Eine derartige, vielfach angewandte, spezielle Ausführungsform kann dabei zum Beispiel gebildet werden, indem bei den Ausführungen in obiger Beschreibung der Begriff "Linear" durch "Winkel" ersetzt wird und die Code-Skala derart zu einem Kreis geschlossen wird, dass auch an der Schnittstelle von Anfang und Ende zwei unterschiedliche Absolutcodefolgen oder Absolutcodefolgenteile aneinander stossen - also über den gesamten ausgewerteten Umfangsbereich des Drehgebers die Absolutcodefolgen abwechslungsweise angeordnet sind. Es kann z.B. ein Codeträger 80, welcher die erfindungsgemässe Absolutcodeskala in einer kreisringsegmentförmigen Anordnung trägt, derart ausgebildet sein, dass sich unterschiedliche Ausschnitte einer ersten Absolutcodefolge 5 und einer zweite Absolutcodefolge 6 jeweils abwechslungsweise in (beispielsweise zumindest annähernd gleich grossen) Winkelsegmenten entlang des Umfangs aneinanderreihen.

Ein oder mehrere Leseköpfe 4a,4b sind jeweils mit einer Vielzahl von Sensorelementen zur Erfassung der auszuwertenden physikalischen Merkmale der Codemarken 19 ausgebildet, welche derart angeordnet sind, dass mit diesen die Übergansstellen von der ersten Absolutcodefolge 5 zu der zweiten Absolutcodefolge 6 erfassbar sind, sodass die erfindungsgemässe Verschiebung zweier Teil-Abschnitte aus der selben Absolutcodefolgen zueinander erfassbar sind. Diese Verschiebung codiert erfindungsgemäss eine absolute Positionsinformation, insbesondere in analoger Weise, wie dies weiter oben anhand einer Linearcodierung bereits erläutert wurde. Die Codefolgen können dabei anhand der eindeutigen Zugehörigkeit derer Codewerte zu einer der Absolutcodefolgen zugeordnet werden.

Dabei kann, wie beim Erfassungsbereich 4b gezeigt, die Code-Erfassung mit einer Anordnung von Sensorelementen entlang eines Kreisbogens erfolgen. Es kann aber auch eine lineare Anordnung von Sensorelementen wie beim Erfassungsbereich 4a genutzt werden. Bei einem linearen Erfassungselement kann entweder ein gerades Sehnen-Stück der des krummen Codeverlaufs erfolgen. Dabei kann insbesondere mit der oben beschriebenen Ermittlung der Codewerte anhand von Relativverhältnissen zwischen den Codemarken eine allfällige Verzerrung aufgrund des unterschiedlichen Verlaufs oder eines Schrägschnitts der Codemarken zumindest Teilweise ausgleichen, sodass eine hinreichend robuste Codewerterkennung von ein- oder mehrwertigen Codierungen erzielt wird. Bei einem linearen Erfassungselement kann alternaiv oder zusätzlich auch mittels optischen Komponenten eine Abbildung oder Projektion eines gekrümmten Kreisringsegments der Code-Skala auf einen linearen Sensor erfolgen, sodass die Krümmung zumindest teilweise ausgeglichen wird. Bei einer oben beschriebenen Ausführungsform, in welcher die Codewerte in Form von Relativverhältnissen der Geometrischen Ausgestaltung der Codemarken enthalten ist, ist dabei insbesondere vorteilhaft, da dabei auch eine Erfassung der gekrümmten Code-Skala mit einem geraden, linearen Sensorelement, durch jeweils lokale Auswertung der Relativbezüge der erfassten Eigenschaften der Codemarken, auch die durch die unterschiedlichen Krümmungen von Code und Erfassungselement hervorgerufenen Verzerrrungen der erfassten Codemarken die Codewertermittlung nicht beeinträchtigt.

Dabei kann auch der oben bereits beschriebene Aspekt der für jede der Absolutcodefolgen unterschiedlichen Ausrichtung der jeweiligen Codemarken implementiert werden, und damit beispielsweise ein lateraler Versatz, ein Taumeln, Exzentrizität, oder andere Fehlstellungen detektier und/oder quantifiziert werden, wie dies bereits anhand eines Lineragebers und des Pendants eines Lateralversatzes und/oder eines Höhenversatzes beschrieben wurde.

Erfindungsgemäss kann also auch eine, Absolutcode-Skala 1 eines Drehgebers ausgebildet sein, welche sich zusammensetzt aus einer ersten Absolutcodefolge 5 mit einer ersten primären Codeperiodenlänge, welche periodisch fortgesetzt wird, und zumindest einer zweiten Absolutcodefolge 6 mit einer zweiten primären Codeperiodenlänge, welche periodisch fortgesetzt wird. Dabei sind die erste und die zumindest zweite Absolutcodefolge 5 und 6 zueinander Codewortfremd.

Entlang der Absolutcode-Skala 1 wird dabei jeweils abwechslungsweise ein Ausschnitt 2 aus der ersten Absolutcodefolge 5 und ein Ausschnitt 3 aus der zumindest zweiten Absolutcodefolge 6 hintereinander angeordnet, wobei in den unterschiedlichen Ausschnitten 2/3 aus derselben Absolutcodefolge 5/6 entlang dieser Anordnung, die Absolutcodefolgen 5/6 jeweils zueinander verschoben sind. Insbesondere sind dabei die Absolutcodefolgen in den Ausschnitten aus denselben Folgen um einen jeweils unterschiedlichen Bruchteil der primären Periodenlänge der Absolutcodefolge 5/6 phasenverschoben. Erfindungsgemässe Ausführungsformen und Weiterbildungen wurden zuvor bereits anhand von linear oder gekrümmt ausgebildeten Beispielen erläutert, wobei sich diese nicht zwingend auf die jeweilige beispielhafte Ausführungsform beschränken müssen.

**Patentansprüche**

1. Absolutcode-Skala (1) eines Positionsgebers, insbesondere eines Linearpositionsgebers oder Drehgebers, zusammengesetzt aus

   o einer ersten Absolutcodefolge (5) mit einer ersten primären Codeperiodenlänge (4), welche periodisch fortgesetzt wird, und
   o zumindest einer zweiten Absolutcodefolge (6) mit einer zweiten primären Codeperiodenlänge, welche periodisch fortgesetzt wird,

   wobei die erste Absolutcodefolge (5) und die zumindest zweite Absolutcodefolge (6) zueinander Codewortfremd sind, und

wobei entlang der Absolutcode-Skala (1)
jeweils abwechslungsweise ein Ausschnitt (2) aus der ersten Absolutcodefolge (5) und ein Ausschnitt (3) aus der zumindest zweiten Absolutcodefolge (6) hintereinander angeordnet sind, und
wobei in den unterschiedlichen Ausschnitten (2/3) aus derselben Absolutcodefolge (5/6) entlang dieser Anordnung die Absolutcodefolgen (5/6) jeweils unterschiedlich zueinander verschoben sind, insbesondere um einen jeweils unterschiedlichen Bruchteil der primären Periodenlänge der Absolutcodefolge (5/6) phasenverschoben sind.

2. Absolutcode-Skala (1) nach Anspruch 1, **dadurch gekennzeichnet, dass**
die erste Absolutcodefolge (5) und die zumindest zweite Absolutcodefolge (6) jeweils eine binäre Maximalfolge ist, insbesondere wobei die erste Absolutcodefolge (5) und die zumindest zweite Absolutcodefolge (6) jeweils eine Aufteilung einer einzigen Maximalfolge in zumindest zwei Fragmente, deren Fragmentlängen keine gemeinsamen Teiler aufweisen, sind.

3. Absolutcode-Skala nach einem der Ansprüche 1 oder 2,
**dadurch gekennzeichnet, dass**
aneinander grenzende hintereinander angeordnete Ausschnitte (2,3) der Absolutcodefolgen (5,6) mit unterschiedlichen Ausrichtungen der den Absolutcode codierenden Codemarken (19) ausgebildet sind, insbesondere wobei jeweils die erste Absolutcodefolge (5) in Form von Strichmarken mit einem ersten Winkel zu einer Längsrichtung der Absolutcode-Skala (1) ausgebildet ist und die zumindest zweite Absolutcodefolge (6) in Form von Strichmarken mit einem zumindest zweiten, vom ersten unterschiedlichen, Winkel zur Längsrichtung der Absolutcode-Skala (1) ausgebildet ist, insbesondere wobei die ersten Ausschnitte (2) und zumindest zweiten Ausschnitte (3) anhand einer Zugehörigkeit des gelesenen Codes zur ersten Absolutcodefolge (5) oder zumindest zweiten Absolutcodefolge (6) zuordenbar ist.

4. Absolutcode-Skala nach einem der Ansprüche 1 bis 3,
**dadurch gekennzeichnet, dass**
die Ausschnitte grösser oder gleich der eindeutigen Codewortlänge der jeweiligen Absolutcodefolgen sind und eine Absolutposition entlang der Absolutcode-Skala (1) anhand der Verschiebung (16) von zwei Ausschnitten (2/3) aus derselben Absolutcodefolge (5/6) zueinander ermittelbar ist.

5. Absolutcode-Skala nach einem der Ansprüche 1 bis 4,
**dadurch gekennzeichnet, dass**
diese durch eine Anordnung von Codemarken (19) auf einem Codeträger gebildet wird, bei welcher Anordnung ein Code-Wert einer der Codemarken (19) anhand eines Verhältnisses einer ersten geometrischen Eigenschaft der Codemarke (19) in relativem Bezug zu einer zweiten geometrischen Eigenschaft einer zweiten Codemarke ausgebildet ist, insbesondere wobei der Codeträger gegenüber einer Code-Leseeinheit (4) beweglich ist und mit der Code-Leseeinheit (4) anhand einer Erfassung eines Teils der Anzahl der Codemarken (19) eine Absolutposition der Leseeinheit (4) gegenüber dem Codeträger ermittelbar ist.

6. Absolutcode-Skala nach Anspruch 5, **dadurch gekennzeichnet, dass**
der Code-Wert in einem relativen Verhältnis von einer geometrischen Ausdehnung einer der Codemarken (19) relativ zu einem geometrischen Abstand zwischen zwei der Codemarken ausgebildet ist, insbesondere als ein Verhältnis von zwei Breiten und/oder zwei Abständen von erster und zweiter Codemarke.

7. Absolutcode-Skala nach einem der Ansprüche 5 oder 6,
**dadurch gekennzeichnet, dass**
die Codemarken (19) mehrwertig in Bezug auf mehrere ihrer, jeweils in eine Relativbeziehung gesetzten, geometrischen Eigenschaften ausgewertet werden.

8. Absolutes Linearmesssystem mit einer Absolutcode-Skala nach einem der Ansprüche 1 bis 7, und
zumindest einer berührungslosen Code-Leseeinheit 4 mit einer im wesentlichen längs zur Absolutcode-Skala (1) ausgerichteten linearen, im wesentlichen zusammenhängenden Anordnung von mehreren, insbesondere optischen, Sensorelementen,
wobei die Code-Leseeinheit zur Erfassung und Auswertung der Absolutcode-Skala (1) anhand von physikalischen, insbesondere optischen Intensitäts-, Charakteristiken von Codemarken (19) der Absolutcode-Skala (1) ausgebildet ist.

9. Absolutes Linearmesssystem nach Anspruch 8, **dadurch gekennzeichnet, dass**

die Code-Leseeinheit (4) mehrere Absolutcode-Lesebereiche (8a,8b,8c,8d) aufweist, welche harmonisch zur Teilung der hintereinander angeordneten Ausschnitte der auszulesenden Absolutcode-Skala (1) angeordneten sind.

**10.** Absolutes Linearmesssystem nach einem der Ansprüche 8 oder 9, **dadurch gekennzeichnet, dass** die Anordnung der Sensorelemente der Code-Leseeinheit (4) zumindest gleichlang oder länger als zumindest eine Länge des längsten der Ausschnitte (2,3) plus zwei mal eine eindeutige Codewortlänge der Absolutcodefolgen (5,6) ist.

**11.** Verfahren zur Erstellung einer Absolutcode-Skala (1) eines Lineargebers oder eines Drehgebers, mit:

einem Bereitstellen einer ersten Absolutcodefolge 5 und
einer zweiten Absolutcodefolge (6), welche zueinander Codewortfremd sind,
einem Bereitstellen von jeweils in Codefolgenrichtung versetzten periodischen Wiederholungen der ersten und der zweiten Absolutcodefolgen, und
einem abwechslungsweisen Aneinanderreihen von Ausschnitten (2,3) aus den jeweils versetzten ersten und zweiten Absolutcodefolgen (5,6),
insbesondere wobei die Ausschnitte grössergleich der eindeutigen Codewortlänge der jeweiligen Absolutcodefolgen (5,6) sind,
wobei in den unterschiedlichen Ausschnitten (2/3) aus derselben Absolutcodefolge (5/6) entlang dieser Anordnung die Absolutcodefolgen (5/6) jeweils unterschiedlich zueinander verschoben sind, insbesondere um einen jeweils unterschiedlichen Bruchteil der primären Periodenlänge der Absolutcodefolge (5/6) phasenverschoben sind.

**12.** Methode zur Auslesung einer, insbesondere nach dem Verfahren des Anspruchs 11 erstellten, absolutcodierten Code-Skala (1) eines Lineargebers oder Drehgebers, mit einem Erfassen eines Teils der Code-Skala (1) mit einem zumindest annähernd längs der Code-Skala (1) ausgerichteten linearen Sensorarray (4),
einem Auswerten einer Codierung in dem erfassten Teil und einer Zuordnung von Ausschnitten (2,3) des erfassten Teils der absolutcodierten Code-Skala (1) zu jeweils einer von zumindest zwei unterschiedlichen, codewortfremden Absolutcodefolgen (5,6), und
einem Bestimmen einer Relativlage von zumindest zwei der Ausschnitte (2,3), welche derselben Absolutcodefolge (5/6) zugeordnet sind, anhand der Codierungen in den Ausschnitten, wobei die Relativlage als Versatz dieser zumindest zwei Ausschnitte zueinander bestimmt wird, und
einem Heranziehen des ermittelten Versatzes als absolutcodierte Positionsinformation des Sensorarrays gegenüber der Code-Skala,
insbesondere mit einem Verorten der absolutcodierten Positionsinformation anhand einer Bestimmung einer Lage, insbesondere Schwerpunktslage, von zumindest einer der, die Codierung bildenden Codemarke in Bezug auf das Sensorarray.

**13.** Methode nach Anspruch 12, **dadurch gekennzeichnet, dass** die Ausschnitte (2,3) aus unterschiedlichen Absolutcodefolgen (5,6) mit Codemarken ausgebildet sind, welche unterschiedliche bekannte Ausrichtungen gegenüber einer Richtung der Code-Skala (1) aufweisen, und
eine Erkennung eines Quer-Versatzes aus einer Relativlage von Ausschnitten (2,3) mit unterschiedlichen Codierungen zueinander und anhand deren bekannten Ausrichtungen erfolgt.

**14.** Methode nach Anspruch 12 oder 13, **dadurch gekennzeichnet, dass**
eine Auswertung eines Codewerts von einer, die Codierung bildenden Codemarken (19) auf Basis einer Relativbeziehung von zwei geometrischen Eigenschaften von einer oder mehreren Codemarken (19) zueinander erfolgt.

**15.** Computerprogrammprodukt mit Programmcode, welcher gespeichert auf einem Datenträger oder als elektromagnetische Welle bereitgestellt ist, und welcher zur Ausführung einer Methode nach einem der Ansprüche 11 bis 14 auf einem Digitalrechner ausgebildet ist.

**Claims**

**1.** Absolute code scale (1) of a position encoder, in particular a linear position encoder or rotational encoder, composed of

- a first absolute code sequence (5) having a first primary code period length (4), which is periodically continued, and
- at least one second absolute code sequence (6) having a second primary code period length, which is periodically continued,

wherein the first absolute code sequence (5) and the at least one second absolute code sequence (6) are codeword-foreign in relation to one another, and

wherein alternately one section (2) from the first absolute code sequence (5) and one section (3) from the at least one second absolute code sequence (6) are successively arranged along the absolute code scale (1), and

wherein, in the different sections (2/3) from the same absolute code sequence (5/6), the absolute code sequences (5/6) are each differently shifted in relation to one another along this arrangement, in particular are phase-shifted by a different fraction of the primary period length of the absolute code sequence (5/6).

2. Absolute code scale (1) according to Claim 1, **characterized in that** the first absolute code sequence (5) and the at least one second absolute code sequence (6) are each a binary maximum length sequence, in particular wherein the first absolute code sequence (5) and the at least one second absolute code sequence (6) are each a segmentation of a single maximum sequence into at least two fragments, the fragment lengths of which do not have any common divisors.

3. Absolute code scale according to any one of Claims 1 or 2,
   **characterized in that** adjoining, successively arranged sections (2, 3) of the absolute code sequences (5, 6) are formed having different alignments of code marks (19) which are coding the absolute code,
   in particular wherein in each case the first absolute code sequence (5) is formed in the form of bar-marks having a first angle in relation to a longitudinal direction of the absolute code scale (1) and the at least one second absolute code sequence (6) is formed in the form of bar-marks having at least one second angle, which is different from the first, in relation to the longitudinal direction of the absolute code scale (1),
   in particular wherein the first sections (2) and at least second sections (3) are assignable on the basis of a belonging of the read code to the first absolute code sequence (5) or to the at least one second absolute code sequence (6).

4. Absolute code scale according to any one of Claims 1 to 3,
   **characterized in that** the sections are at least of equal length or longer than their respective primary code period length and an absolute position along the absolute code scale (1) is ascertainable on basis of the shift (16) of two sections (2/3) of the same absolute code sequence (5/6) in relation to one another.

5. Absolute code scale according to any one of Claims 1 to 4,
   **characterized in that** it is formed by an arrangement of code marks (19) on a code carrier, in which arrangement a code value of one of the code marks (19) is formed on the basis of a ratio of a first geometrical property of the code mark (19) in relative relationship to a second geometrical property of a second code mark,
   in particular wherein the code carrier is movable in relation to a code read unit (4) and an absolute position of the read unit (4) in relation to the code carrier is ascertainable using the code read unit (4) on basis of an acquisition of a part of the number of the code marks (19).

6. Absolute code scale according to Claim 5,
   **characterized in that** the code value is formed in a relative ratio of a geometrical extent of one of the code marks (19) in relation to a geometrical distance between two of the code marks, in particular as a ratio of two widths and/or two distances of a first and second code mark.

7. Absolute code scale according to any one of Claims 5 or 6,
   **characterized in that** the code marks (19) are evaluated polyvalently with respect to a plurality of their geometrical properties in a relationship to each other.

8. Absolute linear measurement system having an absolute code scale according to any one of Claims 1 to 7, and at least one contactless code read unit (4) having a linear, substantialy coherent arrangement, which is aligned substantialy longitudinally to the absolute code scale (1), of a plurality of, in particular optical, sensor elements, wherein the code read unit is designed to acquire and evaluate the absolute code scale (1) on the basis of physical, in particular optical intensity, characteristics of code marks (19) of the absolute code scale (1).

9. Absolute linear measurement system according to Claim 8,

**characterized in that** the code read unit (4) has a plurality of absolute code read regions (8a, 8b, 8c, 8d), which are arranged harmonically in relation to the segmentation of the successively arranged sections of the absolute code scale (1) to be read out.

10. Absolute linear measurement system according to any one of Claims 8 or 9,
   **characterized in that** the arrangement of the sensor elements of the code read unit (4) is at least of equal length or longer than at least one length of the longest of the sections (2, 3), plus two times a unique codeword length of the absolute code sequences (5, 6).

11. Method for preparing an absolute code scale (1) of a linear encoder or a rotational encoder, comprising:

   providing a first absolute code sequence 5 and a second absolute code sequence (6), which are codeword-foreign in relation to one another,
   providing periodic repetitions of the first and the second absolute code sequences, which are each offset in the code sequence direction, and
   an alternating concatenating of sections (2, 3) from the respective offset first and second absolute code sequences (5, 6),
   in particular wherein the sections are greater than or equal to the unique codeword length of the respective absolute code sequences (5, 6),
   wherein, in the different sections (2/3) from the same absolute code sequence (5/6), the absolute code sequences (5/6) are each differently shifted in relation to one another in the different sections (2/3) from the same absolute code sequence (5/6) along this arrangement, in particular are phase-shifted by a different fraction of the primary period length of the absolute code sequence (5/6).

12. Method for reading out an absolute-coded code scale (1), in particular which absolute-coded code scale (1) is prepared according to the method of claim 11, of a linear encoder or rotational encoder, comprising:

   acquiring a part of the code scale (1) using a linear sensor array (4) aligned at least approximately longitudinally in relation to the code scale (1),
   evaluating a coding in the acquired part and assigning portions (2, 3) of the acquired part of the absolute-coded code scale (1) to one of at least two different, codeword-foreign absolute code sequences (5, 6), and
   determining a relative location of at least two of the sections (2, 3), which at least two sections are belonging to the same absolute code sequence (5/6), on the basis of the codings in the sections, wherein the relative location is determined as an offset of those at least two sections in relation to one another, and
   utilizing the offset as an absolute-coded position information of the sensor array in relation to the code scale, in particular comprising a locating of the absolute-coded position information on basis of a determining of a location, in particular of a focal point location, of at least one of the code marks, which are forming the coding, in relation to the sensor array.

13. Method according to Claim 12,
   **characterized in that** the sections from different absolute code sequences (5, 6) are formed using code marks which have different known alignments in relation to a direction of the code scale (1), and
   a recognition of a transverse offset is performed from a relative location of sections (2, 3) having different codings in relation to one another and on the basis of the known alignments thereof.

14. Method according to Claim 12 or 13,
   **characterized in that** an evaluation of a code value of the code marks (19) which are forming the coding, is performed on basis of a relative relationship of two geometrical properties of one or more code marks (19) in relation to one another.

15. Computer program product having program code, which is provided stored on a data carrier or as an electromagnetic wave, and which is designed to execute a method according to any one of Claims 11 to 14 on a digital computer.

**Revendications**

1. Graduation de code absolu (1) d'un codeur de position, notamment d'un codeur de position linéaire ou d'un codeur rotatif, composée de :

• une première séquence de code absolu (5) présentant une première longueur de période de code primaire (4) poursuivie périodiquement, et

• au moins une deuxième séquence de code absolu (6) présentant une deuxième longueur de période de code primaire poursuivie périodiquement,

la première séquence de code absolu (5) et l'au moins une deuxième séquence de code absolu (6) possédant un mot-code différent, et

un extrait (2) de la première séquence de code absolu (5) et un extrait (3) de l'au moins une deuxième séquence de code absolu (6) étant disposés l'un derrière l'autre en alternance le long de la graduation de code absolu (1), et les séquences de code absolu (5/6) dans des différents extraits (2/3) d'une même séquence de code absolu (5/6) étant décalées les unes par rapport aux autres, à chaque fois différemment, le long de cette disposition, notamment décalées en phase d'une fraction, à chaque fois différente, de la longueur de période primaire de la séquence de code absolu (5/6).

2. Graduation de code absolu (1) selon la revendication 1, **caractérisée en ce que** la première séquence de code absolu (5) et l'au moins une deuxième séquence de code absolu (6) sont chacune une séquence maximale binaire, la première séquence de code absolu (5) et l'au moins une deuxième séquence de code absolu (6) étant notamment chacune une part d'un partage d'une séquence maximale unique en au moins deux fragments dont les longueurs n'ont pas de diviseur commun.

3. Graduation de code absolu selon l'une des revendications 1 et 2, **caractérisée en ce que** les extraits (2, 3) des séquences de code absolu (5, 6) disposés directement l'un derrière l'autre présentent des orientations différentes des marques de code (19) codant le code absolu, la première séquence de code absolu (5) étant notamment formée de traits inclinés selon un premier angle par rapport à la direction longitudinale de la graduation de code absolu (1), et l'au moins une deuxième séquence de code absolu (6) étant formée de traits inclinés selon au moins un deuxième angle, différent du premier, par rapport à la direction longitudinale de la graduation de code absolu (1), les premiers extraits (2) et les au moins deuxièmes extraits (3) pouvant notamment être attribués grâce à une appartenance du code lu à la première séquence de code absolu (5) ou à l'au moins une deuxième séquence de code absolu (6).

4. Graduation de code absolu selon l'une des revendications 1 à 3, **caractérisée en ce que** les extraits sont de longueur supérieure ou égale à celle du mot-code univoque des séquences de code absolu correspondantes et il est possible d'obtenir une position absolue le long de la graduation de code absolu (1) à partir du décalage (16) de deux extraits (2/3) l'un par rapport à l'autre d'une même séquence de code absolu (5/6).

5. Graduation de code absolu selon l'une des revendications 1 à 4, **caractérisée en ce que** celle-ci est formée d'une disposition de marques de code (19) sur un support de code, une disposition dans laquelle une valeur de code d'une des marques de code (19) est obtenue par un rapport relatif entre une première propriété géométrique de la marque de code (19) et une deuxième propriété géométrique d'une deuxième marque de code, le support de code étant notamment mobile par rapport à un lecteur de code (4) et le lecteur de code (4) permettant d'obtenir une position absolue du lecteur (4) par rapport au support de code, par détection d'une partie du nombre de marques de code (19).

6. Graduation de code absolu selon la revendication 5, **caractérisée en ce que** la valeur de code est obtenue par un rapport relatif entre une dilatation géométrique de l'une des marques de code (19) et une distance géométrique entre deux des marques de code (19), notamment par un rapport de deux largeurs et/ou deux distances de la première et de la deuxième marque de code.

7. Graduation de code absolu selon l'une des revendications 5 et 6, **caractérisée en ce que** les marques de code (19) sont évaluées en plusieurs valeurs eu égard à plusieurs de leurs propriétés géométriques prises chacune dans une relation.

8. Système de mesure linéaire absolue doté d'une graduation de code absolu selon l'une quelconque des revendications 1 à 7 et

d'au moins un lecteur de code (4) doté d'une disposition de plusieurs éléments capteurs, notamment optiques, ladite disposition étant linéaire, dirigée principalement le long de la graduation de code absolu (1), principalement groupée, le lecteur de code étant conçu pour détecter et évaluer la graduation de code absolu (1) à partir de caractéristiques physiques, notamment d'intensité optique, des marques de code (19) de la graduation de code absolu (1).

9. Système de mesure linéaire absolue selon la revendication 8, **caractérisé en ce que**
le lecteur de code (4) présente plusieurs zones de lecture du code absolu (8a, 8b, 8c, 8d), qui sont disposées de manière harmonique pour le partage des extraits consécutifs de la graduation de code absolu (1) à lire.

10. Système absolu de mesure linéaire selon l'une quelconque des revendications 8 et 9, **caractérisé en ce que**
la disposition des éléments capteurs du lecteur de code (4) est de longueur au moins supérieure ou égale à au moins la longueur du plus long des extraits (2, 3) plus deux fois la longueur d'un mot-code univoque des séquences de code absolu (5, 6).

11. Procédé d'obtention d'une graduation de code absolu (1) d'un codeur linéaire ou d'un codeur rotatif, comportant les étapes suivantes :

mise à disposition d'une première séquence de code absolu (5) et d'une deuxième séquence de code absolu (6) possédant un mot-code différent,
mise à disposition de répétitions périodiques de la première et de la deuxième séquence de code absolu, chacune décalée dans la direction de la séquence de code, et
disposition successive alternée d'extraits (2, 3) des première et deuxième séquences décalées de code absolu (5, 6),
les extraits étant notamment de longueur supérieure ou égale à celle du mot-code univoque des séquences de code absolu (5, 6) correspondantes,
les séquences de code absolu (5/6) dans des différents extraits (2/3) d'une même séquence de code absolu (5/6) étant décalées les unes par rapport aux autres, à chaque fois différemment, le long de cette disposition, notamment décalées en phase d'une fraction, à chaque fois différente, de la longueur de période primaire de la séquence de code absolu (5/6).

12. Méthode de lecture d'une graduation de code codée en absolu (1) d'un codeur linéaire ou d'un codeur rotatif, notamment obtenue par le procédé de la revendication 11, comportant les étapes suivantes :

détection d'une partie de la graduation de code (1) au moyen d'un ensemble linéaire de capteurs (4) dirigé au moins approximativement le long de la graduation de code (1),
évaluation d'un codage dans la partie détectée et attribution d'extraits (2, 3) de la partie détectée de la graduation de code codée en absolu (1), chacun à une d'au moins deux séquences de code absolu (5, 6) différentes possédant un mot-code différent, et
détermination d'une position relative d'au moins deux des extraits (2, 3), attribués à une même séquence de code absolu (5/6), à partir des codages dans les extraits, la position relative étant déterminée comme un décalage de ces au moins deux extraits l'un par rapport à l'autre, et
interprétation du décalage obtenu en tant qu'information, codée de manière absolue, de position de l'ensemble de capteurs par rapport à la graduation de code,
comportant notamment l'étape de détermination de l'information de position codée en absolu à partir de la détermination de la position, notamment du centre de gravité, d'au moins une des marques de code formant le codage, par rapport à l'ensemble de capteurs.

13. Méthode selon la revendication 12, **caractérisée en ce que**
les extraits (2, 3) sont formés de séquences de code absolu (5, 6) différentes présentant des marques de code dont les orientations connues sont différentes par rapport à la direction de la graduation de code absolu (1), et
un décalage transversal est identifié à partir d'une position relative d'extraits (2, 3) dont le codage est mutuellement différent et à l'aide de leurs orientations connues.

14. Méthode selon la revendication 12 ou 13, **caractérisée en ce que**
une valeur de code de l'une des marques de code (19) formant le codage est évaluée à partir d'une relation entre deux propriétés géométriques d'une ou de plusieurs marques de code (19).

15. Produit programme d'ordinateur, comportant un code logiciel enregistré sur un support de données ou disponible sous forme d'onde électromagnétique, et conçu pour exécuter une méthode selon l'une des revendications 11 à 14 sur un ordinateur numérique.

Fig. 1

*Fig. 2*

*Fig. 3*

*Fig. 4*

$\mathfrak{Fig.}\,5$

$\mathfrak{Fig.}\,5a$

$\mathfrak{Fig.}\,5b$

$\mathfrak{Fig.}\,5c$

Fig. 6

Fig. 7

Lesen der Absolutcode-Skala mit zumindest einem
zumindest annähernd längs zur Skala ausgerichteten
Linear-Sensor
71

Ermitteln der Positionen der Codemarken der Absolutcodeskala
(und allenfalls weiteren Codewertbildenden Merkmalen)
Insbesondere mit der ausdehnungsunabhängigen Codierung
und Ermittlung der Codeworte
72

Ermitteln der Codeworte auf Basis einer Relativbeziehung
zwischen geometrischen Codemarkenmerkmalen
73

Zuordnung der Codeworte zu einer ersten oder zweiten
Absolutcodefolge anhand der Codewort-Werte
Und deren geometrischer Lage
74

Bestimmen eines geometrischen Versatzes zwischen zwei
Codeworten der selben Absolutcodefolge
Und bestimmen einer Absolutposition anhand des Versatzes
75

Bestimmung eines geometrischen Versatzes zwischen
Codeworten aus unterschiedlichen Absolutcodefolgen
Und Bestimmung einer Querverschiebung des Codelesers
Quer zur Längsrichtung der Absolutcode-Skala
Aufgrund jeweils unterschiedlicher Ausrichtungen der
Codemarken für jede der Absolutcode-Folgen
76

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0268558 A
- DE 3818044
- EP 0042179 A
- DE 19732398
- DE 68920123
- DE 102008054042
- EP 1043571 A
- CH 704584
- EP 15157967 A